(19) Europäisches Patentamt
European Patent Office
Office européen des brevets

(11) EP 4 756 681 A1

(12) **EUROPEAN PATENT APPLICATION**

(43) Date of publication:
10.06.2026 Bulletin 2026/24

(21) Application number: 24307031.5

(22) Date of filing: 05.12.2024

(51) International Patent Classification (IPC):
*G06N 10/40* (2022.01)   *G06N 10/70* (2022.01)

(52) Cooperative Patent Classification (CPC):
**G06N 10/70; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventor: **MURANI, Anil**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **A METHOD OF CHARACTERIZING A QUANTUM SYSTEM**

(57)   The invention relates to a method of characterizing a quantum system.

This quantum system comprises a non-linear superconducting quantum circuit including a resonant portion having memory and buffer modes coupled to a non-linear element, and a command circuit for driving the memory and buffer modes. The quantum system is further arranged to engineer a 2-to-1 boson exchange.

The characterization method relies on an inverse measurement in which a state is generated in the buffer mode only with the memory drive and the 2-to-1 boson exchange. It is then possible to determine an operating constant of the quantum system with a single quantum state tomography, or the phase of a cat qubit to be subsequently stabilized in the memory mode with a further direct measurement of another state generated in the buffer mode only with the buffer drive.

FIG. 14

EP 4 756 681 A1

**Description**

The field of the invention relates to the characterization of a quantum system, and more particularly of a quantum system for stabilizing a cat qubit.

Generally speaking, superconducting qubits can be implemented as two-level systems of superconducting electronic circuits. Such qubits can be stored in bosonic modes and thus form a particular class of superconducting qubits known as bosonic qubits.

It is known from the state of the art that it is possible to stabilize cat qubits, i.e. bosonic qubits defined by a quantum manifold spanned by the superpositions of two coherent states, which are quasi-classical states of the bosonic mode. To this end, a specific dissipative stabilization mechanism may be performed and consists in engineering a non-linear conversion between two photons of a memory mode that hosts the stabilized quantum manifold and one photon of a buffer mode that is strongly dissipative.

The possibility of realizing such a qubit has been demonstrated by R. Lescanne et al. in "Exponential suppression of bit-flips in a qubit encoded in an oscillator" (Nature Physics, 2020). As mentioned above, the cat qubits rely on a mechanism that dissipates photons in pairs. This process pins down two coherent states to separate locations in phase space. By increasing this separation, an exponential decrease of the bit-flip rate was observed experimentally while only linearly increasing the phase-flip rate. As a result, stabilized cat qubits were demonstrated to benefit from a high noise bias, which means that the bit-flip probability is exponentially smaller than the phase-flip probability. Specifically, this was achieved by using an asymmetrically threaded superconducting quantum interference device ("ATS") as a four-wave mixing non-linear element to engineer the 2-to-1 photon conversion.

Such a 2-to-1 photon conversion can be implemented by means of a parametric pump at frequency $f_p = |2f_a - f_b|$, where $f_a$ is the resonant frequency of the memory mode and $f_b$ is the resonant frequency of the buffer mode.

Generally speaking, the stabilization of cat qubits relies on the use of electromagnetic radiation sources such as the parametric pump mentioned above and a buffer drive at frequency $f_b$.

To this end, the Applicant carried out experiments with a low-quality frequency synthesizer capable of generating a frequency signal up to 20 gigahertz (GHz) with an accuracy of 0.01 hertz (Hz). The Applicant found that this frequency accuracy results in a deterministic phase drift of the cat qubit according to the following empirical law: $\Delta\varphi = \Delta f \times t$, where $\Delta\varphi$ is the phase drift of the cat qubit, $\Delta f$ is the frequency accuracy and $t$ is the duration of the experiment. For example, such frequency accuracy causes the phase of the cat qubit to rotate 360° in about an hour and a half.

This can be remedied by using higher-quality equipment. The Applicant has thus carried out new experiments with a high-quality frequency synthesizer capable of generating a frequency signal up to 40 gigahertz (GHz) with an accuracy of 0.001 hertz (Hz). The result obtained is more satisfactory than with the low-quality frequency synthesizer: the phase of the cat qubit rotates by less than 1° in ten hours. However, a frequency synthesizer of this quality costs around twice as much as the other one, and the frequency accuracy, although lower, still requires calibration adjustments during experiments.

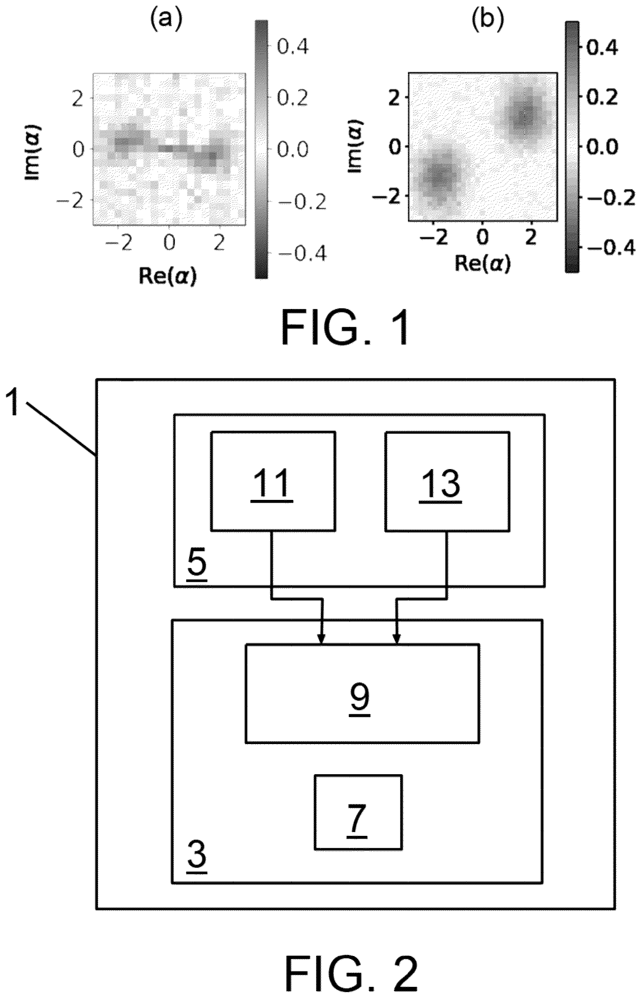

Figure 1 shows the results obtained with the low- and high-quality frequency synthesizers. More specifically, diagram (a) is a Wigner tomography of a cat qubit stabilized with the low-quality frequency synthesizer and which rotates 360° in an hour and a half, while diagram (b) is a Wigner tomography of a cat qubit stabilized with the high-quality frequency synthesizer and which rotates by less than 1° in ten hours.

In order to perform such a calibration of the electromagnetic radiation source(s) used to stabilize cat qubits, a transmon is commonly used as a measuring apparatus coupled to the memory mode. The transmon makes it possible to carry out several Wigner tomographies while sweeping each of the source command parameters in parallel, in particular the respective phases. For instance, Lescanne *et al.* (2020) proposed to associate a transmon with the ATS to measure the cat qubit state. However, as pointed out in this article, such an architecture results in a bit-flip time saturating to a few milliseconds. The Applicant's work revealed that this is due to the quantum manifold stabilization rate being too small to resist to dispersive frequency shifts induced by thermal excitations of the measurement apparatus. Indeed, a transmon has spurious cross-Kerr terms which induce additional noise processes with escape rates out of the quantum manifold given by the very large transmon-cat-qubit dispersive shift.

Moreover, the issues of the transmon had already been observed in the very first implementations of the above-described stabilization scheme - Z. Leghtas et al. (2015) in the article "Confining the state of light to a quantum manifold by engineered two-photon loss" (Science, Vol. 347, No. 6224) and S. Touzard et al. (2018) in the article "Coherent Oscillations inside a Quantum Manifold Stabilized by Dissipation" (Physical Review X 8, 023005) - in which the superconducting circuit element used as a four-wave mixer was a transmon with a single Josephson junction.

It should be added that the implementation of Wigner tomography is a long process, especially when it must be implemented repeatedly to sweep source control parameters.

The present invention seeks to improve the situation.

To this end, the Applicant proposes a method of characterizing a quantum system.

This quantum system comprises:

- a non-linear superconducting quantum circuit including :

  • at least one resonant portion having a memory mode with a memory resonant frequency and a buffer mode with a buffer resonant frequency, and
  • a non-linear element coupled to the at least one resonant portion,

- a command circuit including at least :

  • a memory drive arranged to deliver electromagnetic radiation at a frequency substantially equal to the memory resonant frequency to the at least one resonant portion to drive the memory mode, the memory drive having a controllable memory phase, and
  • a buffer drive arranged to deliver electromagnetic radiation at a frequency substantially equal to the buffer resonant frequency to the at least one resonant portion to drive the buffer mode, the buffer drive having a controllable buffer phase,

the quantum system being arranged to engineer a two-to-one boson exchange between the memory mode and the buffer mode.

The method comprises the following operations:

a) engineering the two-to-one boson exchange between the memory mode and the buffer mode and turning on the memory drive with the memory phase being set, the buffer drive being turned off, causing the non-linear superconducting quantum circuit to generate a first buffer state in the buffer mode;
b) measuring a phase of the first buffer state;
the method further comprising the following operations:

  c1) engineering the two-to-one boson exchange between the memory mode and the buffer mode and turning on the buffer drive with the buffer phase being set, causing the non-linear superconducting quantum circuit to stabilize a cat qubit in the memory mode,
  c2) performing a quantum state tomography by turning on the memory drive with the memory phase being substantially the same as that of operation a), and measuring a phase of the cat qubit, and
  c3) determining an operating constant of the quantum system based on the set buffer phase and the respective phases of the first buffer state and the cat qubit;
  or,
  d1) turning on the buffer drive with the buffer phase being set, the two-to-one boson exchange between the memory mode and the buffer mode and the memory drive being both turned off, causing the non-linear superconducting quantum circuit to generate a second buffer state in the buffer mode,
  d2) measuring a phase of the second buffer state, and
  d3) determining a phase of a cat qubit to be subsequently stabilized in the memory mode by the non-linear superconducting quantum circuit by engineering the two-to-one boson exchange between the memory mode and the buffer mode and turning on the buffer drive with the buffer phase being substantially the same as that of operation d1), the phase of the cat qubit to be subsequently stabilized being determined based on a difference of the respective phases of the first buffer state and the second buffer state.

According to one or more embodiments, the non-linear element being an asymmetrically threaded superconducting quantum interference device, and the command circuit further including a two-photon pump arranged to deliver electromagnetic radiation at a frequency substantially equal to the absolute value of the difference between twice the memory resonant frequency and the buffer resonant frequency to the asymmetrically threaded superconducting quantum interference device, engineering the two-to-one boson exchange between the memory mode and the buffer mode in operation(s) a) and/or c1) includes turning on the two-photon pump.

Alternatively, the command circuit further including a DC voltage source arranged to deliver DC voltage to bias the non-linear element, with the delivered DC voltage having a value inducing an electromagnetic oscillation having a frequency substantially equal to the absolute value of the difference between twice the memory resonant frequency and the buffer resonant frequency in the non-linear superconducting quantum circuit, engineering the two-to-one boson exchange between the memory mode and the buffer mode in operation(s) a) and/or c1) includes turning on the DC voltage source.

Alternatively, the non-linear element being a three-wave mixing non-linear element, and the buffer resonant frequency being substantially equal to twice the memory resonant frequency, the method comprises operations c1), c2), and c3), and the two-to-one boson exchange between the memory mode and the buffer mode is intrinsically engineered in

EP 4 756 681 A1

operation(s) a) and/or c1) by the non-linear superconducting quantum circuit.

According to one or more embodiments, the operating constant of the quantum system is determined in operation c3) as follows:

$$K = 2\theta_{cat} + \theta_{b,1}^{RDO} - \theta_d^c$$

where: - $K$ is the operating constant;

- $\theta_{cat}$ is the phase of the cat qubit measured in operation c2);

- $\theta_{b,1}^{RDO}$ is the phase of the first buffer state measured in operation b); and

- $\theta_d^c$ is the buffer phase of the buffer drive turned on in operation c1).

According to one or more embodiments, operations a) and b) are performed prior to operations c1), c2) and c3), operation c1) includes only turning on the buffer drive with the buffer phase being set, and operation c2) includes only performing the quantum state tomography, and measuring the phase of the cat qubit.

Alternatively, operations c1), c2) and c3) are performed prior to operations a) and b), and operation a) includes only turning off the buffer drive.

According to one or more embodiments, the method comprises operations c1), c2), and c3), and the method further comprises calibrating the quantum system to achieve a desired value for the phase of the cat qubit, the calibrating of the quantum system including: c4) setting the buffer phase of the buffer drive to the following value:

$$\widetilde{\theta_d^c} = 2\widetilde{\theta_{cat}} + \theta_{b,1}^{RDO} - K$$

where: - $\widetilde{\theta_d^c}$ , is the value to which the buffer phase of the buffer drive is set;

- $\widetilde{\theta_{cat}}$ is the desired value to be achieved for the phase of the cat qubit;

- $\theta_{b,1}^{RDO}$ is the phase of the first buffer state measured in operation b); and
- K is the operating constant.

In such a case, the calibrating of the quantum system may further include, subsequent to operation c4):

c5) performing operations a) and b) again to measure a new phase of the first buffer state; and
c6) adjusting the buffer phase of the buffer drive based on the new phase of the first buffer state.

Typically, the desired value to be achieved for the phase of the cat qubit is substantially equal to zero.

According to one or more embodiments, the phase of the cat qubit to be subsequently stabilized in the memory mode by the non-linear superconducting quantum circuit is determined in operation d3) as follows:

$$\theta_{cat}^{th} = \frac{1}{2}(\pi + \theta_{b,2}^{RDO} - \theta_{b,1}^{RDO})$$

where: - $\theta_{cat}^{th}$ is the phase of the cat qubit to be subsequently stabilized in the memory mode by the non-linear superconducting quantum circuit;

- $\theta_{b,1}^{RDO}$ is the phase of the first buffer state measured in operation b); and

- $\theta_{b,2}^{RDO}$ is the phase of the second buffer state measured in operation d2).

According to one or more embodiments, operations a) and b) are performed prior to operations d1), d2) and d3), and d1) includes turning off both the two-to-one boson exchange between the memory mode and the buffer mode and the memory drive, and turning on the buffer drive with the buffer phase being set.

In such a case, the method may further comprise calibrating the quantum system to achieve a desired value for the phase of the cat qubit to be subsequently stabilized in the memory mode by the non-linear superconducting quantum circuit, the calibrating of the quantum system including:

d4) adjusting the buffer phase of the buffer drive to cause the phase of the second buffer state to reach the following value:

$$\widetilde{\theta_{b,2}^{RDO}} = \theta_{b,1}^{RDO} + 2\widetilde{\theta_{cat}} - \pi$$

where: - $\widetilde{\theta_{b,2}^{RDO}}$ is the value to be reached for the phase of the second buffer state;

- $\theta_{b,1}^{RDO}$ is the phase of the first buffer state measured in operation b); and

- $\widetilde{\theta_{cat}}$ is the desired value to be achieved for the phase of the cat qubit.

Alternatively, operations d1), d2) and d3) are performed prior to operations a) and b), and operation a) includes turning off the buffer drive, engineering the two-to-one boson exchange between the memory mode and the buffer mode, and turning on the memory drive with the memory phase being set.

In such a case, the method may further comprise calibrating the quantum system to achieve a desired value for the phase of the cat qubit to be subsequently stabilized in the memory mode by the non-linear superconducting quantum circuit, the calibrating of the quantum system including:

d4) adjusting the buffer phase of the buffer drive and/or the two-to-one boson exchange between the memory mode and the buffer mode to cause the phase of the first buffer state to reach the following value:

$$\widetilde{\theta_{b,1}^{RDO}} = \theta_{b,2}^{RDO} - 2\widetilde{\theta_{cat}} + \pi$$

where: - $\widetilde{\theta_{b,1}^{RDO}}$ is the value to be reached for the phase of the first buffer state;

- $\theta_{b,2}^{RDO}$ is the phase of the second buffer state measured in operation d2); and

- $\widetilde{\theta_{cat}}$ is the desired value to be achieved for the phase of the cat qubit.

Other features and advantages of the invention will become apparent from the following description provided for indicative and non-limiting purposes, with reference to the accompanying drawings, wherein:

- Figure 1 illustrates Wigner tomographies of a cat qubit stabilized with a low- and a high-quality frequency synthesizers,

- Figure 2 illustrates a diagram of a generic quantum system comprising a non-linear superconducting quantum circuit and a command circuit,

- Figure 3 illustrates an embodiment of the generic quantum system of figure 2 arranged to perform a parametric dissipative stabilization of a cat qubit,

- Figure 4 illustrates a partial electrical equivalent diagram of a first galvanic example implementation of the quantum system of figure 3,

- Figure 5 illustrates a partial electrical equivalent diagram of a second galvanic example implementation of the quantum system of figure 3,

- Figure 6 illustrates a partial electrical equivalent diagram of a third galvanic example implementation of the quantum system of figure 3,

- Figure 7 illustrates a partial electrical equivalent diagram of a capacitive example implementation of the quantum system of figure 3,

- Figure 8 illustrates an embodiment of the generic quantum system of figure 2 arranged to perform a DC dissipative stabilization of a cat qubit,

- Figure 9 illustrates a circuit including a DC voltage source applied across a Josephson junction,

- Figure 10 illustrates a partial electrical equivalent diagram of a galvanic example implementation of the quantum system of figure 8,

- Figure 11 illustrates a partial electrical equivalent diagram of a capacitive example implementation of the quantum system of figure 8,

- Figure 12 illustrates an embodiment of the generic quantum system of figure 2 arranged to perform a resonant dissipative stabilization of a cat qubit,

- Figure 13 illustrates an example implementation of the quantum system of figure 12,

- Figure 14 illustrates a method of characterizing the generic quantum system of figure 2 according to the invention,

- Figure 15 schematically illustrates the quantum system of figure 3 with the various phases involved,

- Figure 16 illustrates the "INV" part of the method of figure 14,

- Figure 17 illustrates the "STAB" part of the method of figure 14,

- Figure 18 illustrates several couples buffer readout - Wigner tomography,

- Figure 19 illustrates the affine relationship between the cat qubit phase and the buffer phase,

- Figure 20 illustrates the "BUFF MES" part of the method of figure 14, and

- Figure 21 illustrates a calibration of the generic quantum system of figure 2 implemented from the method of figure 14.

The drawings and the following description are comprised for the most part of positive and well-defined features. As a result, they are not only useful in understanding the invention, but they can also be used to contribute to its definition, should the need arise.

A. Cat qubits

So far, the Applicant's work has been generally concerned with the stabilization of cat qubits. As previously explained, R. Lescanne *et al.* (2020) demonstrated that such cat qubits can be stabilized with a non-linear conversion between two photons of a memory mode a - also known as "cat qubit mode" - and one photon of a buffer mode b.

A cat qubit is defined as a two-dimensional manifold spanned by the so-called cat states $\left|C_\alpha^\pm\right\rangle$ which are superpositions of two coherent states $|\alpha\rangle$ and $|-\alpha\rangle$:

$$\left|C_\alpha^\pm\right\rangle = N^\pm(|\alpha\rangle \pm |-\alpha\rangle)$$

with :

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\overline{n} = |\alpha|^2$ - of the Schrödinger cat states of the cat qubits. As previously mentioned, this exponential suppression of bit-flips is only at the cost of linear increase of phase-flips.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flips with the average number of photons in the cat states.

It is generally considered that the use of a single repetition code is sufficient to correct the remaining errors as bit-flips are sufficiently rare; and, more particularly, a phase-flip correction code is sufficient to correct the remaining phase-flips. This can be for instance a repetition code defined in the dual base or any other state-of-the-art error correction code.

A. 1 Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a four-wave mixing non-linear element - typically a Josephson junction or an ATS - to the memory mode a and by engineering the Hamiltonian $H/\hbar = g_2(a^2 - \alpha^2)b^\dagger + \text{h. c.}$, where b is the photon annihilation operator of the buffer mode b and $g_2$ is the two-photon coupling rate, by applying to the four-wave mixing non-linear element a pump at frequency $|2f_a - f_b|$ and a drive of the buffer mode b at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, $a$ is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \text{h. c.}$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \sinh(r)e^{i\theta}a^\dagger)^2 - \alpha^2\right)$, where $\kappa_{SC}$ is the squeezed two-photon dissipation rate, $a$ is the photon annihilation operator of the memory mode a, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing non-linear element - typically a Josephson junction or an ATS -, to the memory mode a and by engineering the Hamiltonian $H/\hbar = g_{SC}((\cosh(r)a + \sinh(r)e^{i\theta}a^\dagger)^2 - \alpha^2)b^\dagger + \text{h. c.}$, where b is the photon annihilation operator of the buffer mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/\hbar = g_2(a^2 + \lambda a^\dagger a - \alpha^2)b^\dagger + \text{h.c.}$, where $g_2$ is the amplitude of a pump at frequency $|2f_a - f_b|$, $a$ is the annihilation operator of the memory mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a DC dissipative stabilization, for which the Applicant filed the European patent application EP 23306839.4, in which a cat qubit is stabilized in the spirit of the previous stabilization scheme a), except that the two-photon pump that engineers the non-linear conversion between two photons of the memory mode a and one photon of the buffer mode b is replaced with a DC voltage source which biases a non-linear element formed exclusively of one or more Josephson junctions, such that the DC-biased non-linear element acts as a voltage-to-frequency converter which, at the appropriate voltage bias, provides the required parametric interaction at the frequency $|2f_a - f_b|$ necessary to achieve dissipative stabilization. In particular, the two-photon coupling rate $g_2$ is therefore not limited by the amplitude of the two-photon pump: $g_2 = \frac{E_J}{4}\varphi_a^2\varphi_b$, where $E_J$ is the Josephson energy of the one or more Josephson junctions, $\varphi_a$ is the zero-point fluctuation of the phase of the memory mode a, and $\varphi_b$ is the zero-point fluctuation of the phase of the buffer mode b.

h) a resonant dissipative stabilization, for which the Applicant filed the European patent application EP 21306965.1, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a three-wave mixing non-linear element to the memory mode a which engineers the Hamiltonian $H/\hbar = g_2(a^2 - \alpha^2)b^\dagger + \text{h. c.}$, where b is the photon annihilation operator of the buffer mode b provided the mode frequencies verify substantially $2f_a = f_b$ and $g_2 < \kappa_b$ to which a drive of the buffer mode at frequency $f_b$ is added.

The present invention is generic and is not limited to a specific stabilization scheme. Generally speaking, the teaching of the invention applies to the context of the stabilization of a cat qubit involving at least a 2-to-1 boson exchange between the memory mode a and the buffer mode b as well as a drive of the buffer.

The memory mode a may be realized with an acoustic resonator, while the buffer mode b may be realized with an electromagnetic buffer. In such a case, the 2-to-1 boson exchange is achieved by exchanging two phonons in the acoustic resonator with one photon in the electromagnetic buffer.

The acoustic resonator may be a nanomechanical resonator. Examples include phononic crystal defect resonators (PCDRs), which are nanoscale devices designed to support localized acoustic resonances in the gigahertz range. As notably demonstrated in P. Arrangoiz-Arriola et al. "Resolving the energy levels of a nanomechanical oscillator" (Nature 571, 537 (2019)), a hybrid platform combining nanomechanical piezoelectric resonators with a superconducting qubit on a single chip allows achieving strong couplings between acoustic and electromagnetic modes in superconducting circuits. The nanomechanical piezoelectric resonators may be fabricated using piezoelectric materials such as lithium niobate ($LiNbO_3$).

Particularly promising are quasi-one-dimensional PCDRs which operate at gigahertz frequencies and confine acoustic modes to volumes smaller than 1 $\mu m^3$ within suspended nanostructures. Prior experiments have demonstrated their coupling to transmon qubits, offering potential advantages over conventional electromagnetic resonators.

Other acoustic resonators, such as membranes, could also be employed, provided linear acoustic-to-electromagnetic coupling is achieved in order to perform the 2-to-1 boson exchange.

However, in the rest of the description, and for the sake of simplification, the 2-to-1 boson exchange is a 2-to-1 photon exchange.

A.2 Generic quantum system for stabilizing a cat qubit

Figure 2 illustrates a generic quantum system 1 arranged to stabilize a cat qubit.

The quantum system 1 comprises a non-linear superconducting quantum circuit 3 and a command circuit 5.

The non-linear superconducting quantum circuit 3 is arranged to make possible three- and/or four-wave mixing between the memory mode a and the buffer mode b.

The memory mode a and the buffer mode b correspond to natural resonant frequencies of the non-linear superconducting quantum circuit 3. Consequently, the memory mode a and the buffer mode b each have a respective resonant frequency. The memory mode a has a resonant frequency $f_a = \frac{\omega_a}{2\pi}$ and the buffer mode b has a resonant frequency $f_b = \frac{\omega_b}{2\pi}$, where $\omega_a$ and $\omega_b$ are the respective angular frequencies of the memory mode a and the buffer mode b.

By "having" a memory mode and a buffer mode, it should be understood here that the non-linear superconducting quantum circuit 3 comprises components operating in a superconducting regime which host the modes independently of each other or concurrently. In other words, the memory mode a and the buffer mode b may be hosted in different subsets of components of the superconducting circuit or on the same subset of components.

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

The non-linear superconducting quantum circuit 3 is intended to be subject to electromagnetic radiations delivered by the command circuit 5 in order to engineer various non-linear interactions between the memory mode a and the buffer mode b. The frequency of each electromagnetic radiation is tuned to select specific terms within the rotating-wave approximation (RWA).

The non-linear superconducting quantum circuit 3 comprises a non-linear element 7 and at least one resonant portion 9.

The non-linear element 7 can be a four-wave mixing non-linear element, for example an ATS or a Josephson junction in the case of a parametric dissipative stabilization which corresponds to stabilization scheme a) in subsection A.1 above or an array of one or more Josephson junctions in the case of a DC dissipative stabilization which corresponds to stabilization scheme g) in same subsection A.1.

The non-linear element 7 can also be a three-wave mixing non-linear element, for example a superconducting non-linear asymmetric inductive element (SNAIL) in the case of a resonant dissipative stabilization which corresponds to stabilization scheme h) in the same subsection A. 1.

The at least one resonant portion 9 is arranged to provide the non-linear superconducting quantum circuit 3 with the memory mode a and the buffer mode b having respective resonant frequencies $f_a$ and $f_b$.

In the schematic diagram of the generic quantum system 1 illustrated in figure 2, the non-linear superconducting quantum system 3 comprises only one resonant portion 9. Indeed, a single resonant portion can be configured to produce both the memory mode a and the buffer mode b. However, the non-linear superconducting quantum system 3 typically comprises two resonant portions to form the memory mode a and the buffer mode b respectively.

The command circuit 5 is arranged to deliver electromagnetic radiations.

More particularly, the command circuit 5 is arranged at least to drive the memory mode a and the buffer mode b.

To this end, as illustrated in figure 2, the command circuit 5 comprises at least a memory drive 11 and a buffer drive 13.

The memory drive 11 is an electromagnetic radiation source arranged to deliver electromagnetic radiation at a frequency substantially equal to $f_a$ to the resonant portion 9 to drive the memory mode a. In the case in which the non-linear superconducting quantum system 3 comprises two resonant portions forming the memory mode a and the buffer mode b respectively, the memory drive 11 is arranged to deliver electromagnetic radiation to the one of these two resonant portions corresponding to the memory mode a.

The memory drive 11 is typically a microwave radiation source. It should be noted that such a microwave radiation source can be realized using a source emitting electromagnetic radiation in a wavelength range other than microwaves, such as an optical light source, provided that a spectral down-conversion is performed to convert the electromagnetic radiation into microwaves.

It should be added that, in operation, the memory drive 11 is characterized, *inter alia,* by a phase, hereinafter memory phase. Such a memory phase can be controlled and is therefore part of the source control parameters.

The buffer drive 13 is an electromagnetic radiation source arranged to deliver electromagnetic radiation at a frequency substantially equal to $f_b$ to the resonant portion 9 to drive the buffer mode b. In the case in which the non-linear superconducting quantum system 3 comprises two resonant portions forming the memory mode a and the buffer mode b respectively, the buffer drive 13 is arranged to deliver electromagnetic radiation to the one of these two resonant portions corresponding to the buffer mode b. Such a buffer drive 13 allows to generate a term $a^2 b^\dagger$ + h. c.

The buffer drive 13 is typically a microwave radiation source. As explained above, a microwave radiation source can be realized using a source emitting electromagnetic radiation in a wavelength range other than microwaves, such as an optical light source, provided that a spectral down-conversion is performed to convert the electromagnetic radiation into microwaves.

It should be added that, in operation, the buffer drive 13 is characterized, *inter alia,* by a phase, hereinafter buffer phase. Such a buffer phase can be controlled and is therefore part of the source control parameters.

By "a frequency substantially equal to", it should be understood that, ideally, the frequency is exactly equal to the desired value. However, in practice, the frequency value deviates from the desired value, typically by 1 or even 5%, due to the inherent precision of the hardware used.

A fundamental difference between memory drive 11 and buffer drive 13 lies in the fact that only the buffer drive 13 is intended to be involved in stabilizing a cat qubit while the memory drive 11 is intended to be involved in measurement processes for the purposes of characterizing the generic quantum system 1, or even its calibration.

Finally, as explained previously, the invention falls within a context where a 2-to-1 boson exchange - which is typically a 2-to-1 photon exchange - between the memory mode a and the buffer mode b must be implemented to stabilize the cat qubit. As detailed in the remainder of the description, such a 2-to-1 boson exchange can be implemented in different ways, for example by using an additional electromagnetic radiation source to parametrically pump the non-element linear 7 in the case of a parametric dissipative stabilization, a DC voltage source to bias the non-linear element 7 in the case of a DC dissipative stabilization or through the intrinsic characteristics of the resonant portion 9 in the case of a resonant dissipative stabilization.

Subsection A.3 below presents in detail an example in which the quantum system 1 is arranged to stabilize a cat qubit according to the parametric dissipative stabilization.

Subsection A.4 below presents an example in which the quantum system 1 is arranged to stabilize a cat qubit according to the DC dissipative stabilization.

Subsection A.5 below presents an example in which the quantum system 1 is arranged to stabilize a cat qubit according to the resonant dissipative stabilization.

A.3 Quantum system - parametric dissipative stabilization

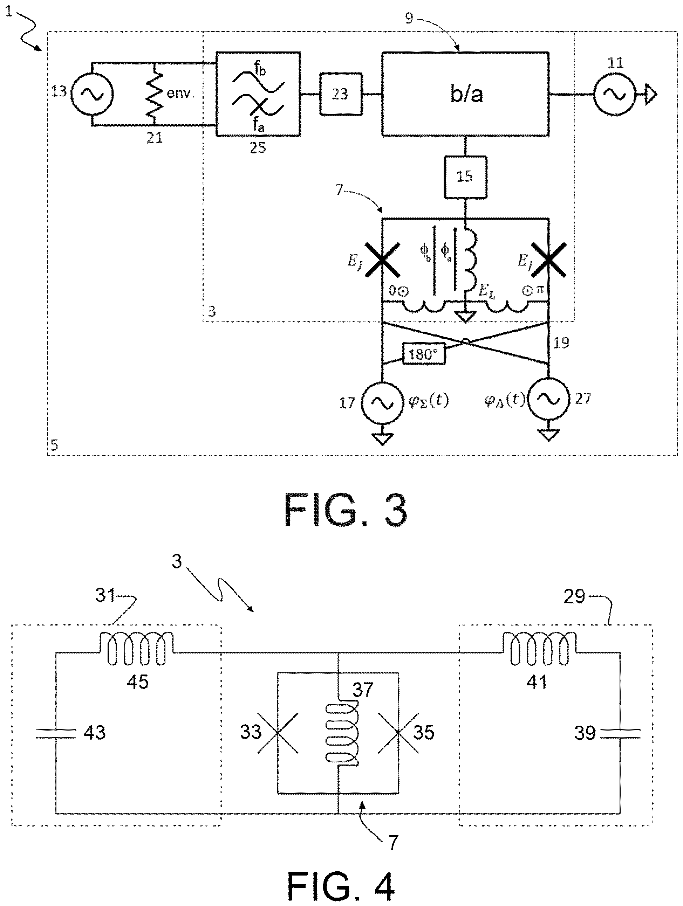

Figure 3 illustrates an embodiment in which the quantum system 1 is arranged to perform the parametric dissipative stabilization to stabilize a cat qubit.

In the example of figure 3, the non-linear element 7 is an ATS.

It is known to the skilled person that an ATS can be used to engineer the 2-to-1 photon exchange between the memory mode a and the buffer mode b in order to perform a parametric dissipative stabilization, as successfully shown by R. Lescanne *et al.* (2020).

It should be noted that the parametric dissipative stabilization can be implemented with a Josephson junction instead of an ATS.

The ATS 7 has flux lines through which radiation can be delivered to modulate a common flux and/or a differential flux.

The 2-to-1 photon exchange is obtained by parametrically pumping the ATS 7 at the frequency $f_p = |2f_a - f_b|$. Advantageously, the pump frequency satisfies $f_p \gg g_2$ to make this parametric pumping work as well as possible, where $g_2$ is the two-photon coupling rate.

It is known to the skilled person that, when biased at its flux working point (0 - $\pi$ or conversely), the Hamiltonian $H_{ATS}$ of the ATS 7 has the following "sin-sin" form:

$$H_{ATS}/\hbar = -2E_J \sin\big(\varphi_\Sigma(t)\big) \sin(\varphi) + \frac{E_L}{2}\big(\varphi - \varphi_\Delta(t)\big)^2$$

where: - $\varphi = \varphi_a(a + a^\dagger) + \varphi_b(b + b^\dagger)$ is the total superconducting phase difference across the ATS 7,

- $\varphi_a$ is the zero-point fluctuation of the phase of the memory mode a across the ATS 7,
- $\varphi_b$ is the zero-point fluctuation of the phase of the buffer mode b across the ATS 7,
- $E_J$ is the Josephson energy of the side junctions,
- $E_L$ is the inductive energy of the central inductance,
- $\varphi_\Sigma(t)$ corresponds to a common flux modulation of the two loops of the ATS 7,
- $\varphi_\Delta(t)$ corresponds to a differential flux modulation of the two loops of the ATS 7, and
- h is the reduced Planck constant.

The common flux modulation $\varphi_\Sigma(t)$ can be implemented by delivering electromagnetic radiations - typically microwave radiations - through flux lines of the ATS 7 out of phase, while the differential flux modulation $\varphi_\Delta(t)$ can be

implemented by delivering electromagnetic radiations - typically microwave radiations - through flux lines of the ATS 7 in phase.

Parametric pumping of the ATS 107 is typically done by pumping the common flux as pumping the differential flux merely displaces the modes coupled to the ATS 107.

As an example, by pumping the common flux at the frequency $f_p = |2f_a - f_b|$, $\varphi_\Sigma(t) = \varepsilon_p \cos(2\pi f_p t)$, the non-linear resonant part of the Hamiltonian writes in the rotating frame:

$$H_{ATS}/\hbar = \frac{E_J \epsilon_p \varphi_a^2 \varphi_b}{2}(a^2 b^\dagger + \text{h.c.})$$

which is typically the 2-to-1 photon exchange Hamiltonian needed to engineer the two-photon stabilization.

The at least one resonant portion 9 is arranged to be coupled to or included in the ATS 7 to provide the non-linear superconducting quantum circuit 3 with the memory mode a and the buffer mode b. More particularly, the memory mode a and the buffer mode b "participate" in the ATS 7, which means that a portion or the entirety of the mode magnetic energy is stored in the ATS 7. Such a participation can be quantified by the zero-point fluctuation of the superconducting phase across the ATS 7, noted $\varphi_a$ for the memory mode a and $\varphi_b$ for the buffer mode b.

The at least one resonant portion 9 takes the form of a linear electromagnetic network. Such a linear electromagnetic network is such that, when coupled via a linear coupler 15 to the ATS 7 which acts as an inductive element, the non-linear superconducting quantum circuit 3 has the memory mode a and the buffer mode b at respective resonant frequencies $f_a$ and $f_b$ which participate in the ATS 7.

Such a linear electromagnetic network is typically a linear microwave network when the memory drive 11 and the buffer drive 13 are both microwave radiation sources.

The command circuit 5 comprises a two-photon pump 17 in addition to the above-mentioned memory drive 11 and buffer drive 13.

The two-photon pump 17 is set-up to modulate the common flux in the ATS 7.

For this purpose, an electromagnetic network 19 is used to split the electromagnetic radiation emitted by the two-photon pump 17 and apply it to each node of the ATS 7 with the correct phase. Alternatively, two different electromagnetic radiation sources could be used, each being simply coupled to a single node of the ATS 7 and their relative phase and amplitude being set so as to achieve the desired flux modulation.

The two-photon pump 17 is an electromagnetic radiation source arranged to deliver electromagnetic radiation at a frequency substantially equal to $|2f_a - f_b|$ to the ATS 7 to cause the non-linear superconducting quantum circuit 3 to perform the 2-to-1 photon exchange, and thus to engineer a term $a^2 b^\dagger + \text{h.c.}$

The two-photon pump 17 is typically a microwave radiation source. As explained above, a microwave radiation source can be realized using a source emitting electromagnetic radiation in a wavelength range other than microwaves, such as an optical light source, provided that a spectral down-conversion is performed to convert the electromagnetic radiation into microwaves.

It should be added that, in operation, the two-photon pump 7 is characterized, *inter alia,* by a phase, hereinafter two-photon phase. Such a two-photon phase can be controlled and is therefore part of the source control parameters.

Such an electromagnetic network 19 is typically a microwave network when the two-photon pump 17 is a microwave radiation source.

In order to convert the 2-to-1 photon exchange two-photon dissipation, the buffer mode b is selectively coupled to a load 21 via a linear coupler 23 and an electromagnetic filter 25 configured as a band pass filter with a frequency $f_b$.

Alternatively, the electromagnetic filter 25 may be configured as a band stop filter at a frequency $f_a$ and may be placed in between, on the one hand, the external environment and, on the other hand, the memory mode a and the buffer mode b to isolate the memory mode a and thus prevent the memory mode a from suffering additional losses coming from unwanted coupling to the load 21.

Alternatively, it may be configured as a low-pass (respectively high-pass) filter if $f_a > f_b$ (respectively $f_b > f_a$). In other embodiments, the electromagnetic filter 25 can be omitted when coupling between the load 21 and substantially only the buffer mode b can be established. As explained above, the memory mode a has a high-quality factor $Q_a$ while the buffer mode b has a low-quality factor $Q_b$.

Typically, the electromagnetic filter 25 is a microwave filter when the buffer drive 13 is a microwave radiation source.

In the above, the load 21 can be seen as part of the command circuit 5 of figure 3, while the linear coupler 23 and the electromagnetic filter 25 can be seen as part of the non-linear superconducting quantum circuit 3.

Finally, in figure 3, the command circuit 5 further comprises an electromagnetic radiation source 27 set-up to modulate the differential flux in the ATS 7 through the electromagnetic network 19.

Once again, the electromagnetic network 19 is used for convenience but can be omitted and the electromagnetic radiation source 27 could be applied directly to both nodes of the ATS 7, their relative phase and amplitude being set so as to achieve the desired flux modulation.

For the sake of completeness, it may also be noted that the electromagnetic radiation source 25 can be used, instead of the buffer drive 13, to deliver electromagnetic radiation at a frequency $f_b$ to the at least one resonant portion 9 to drive the buffer mode b.

A.3.1 Galvanic example implementation

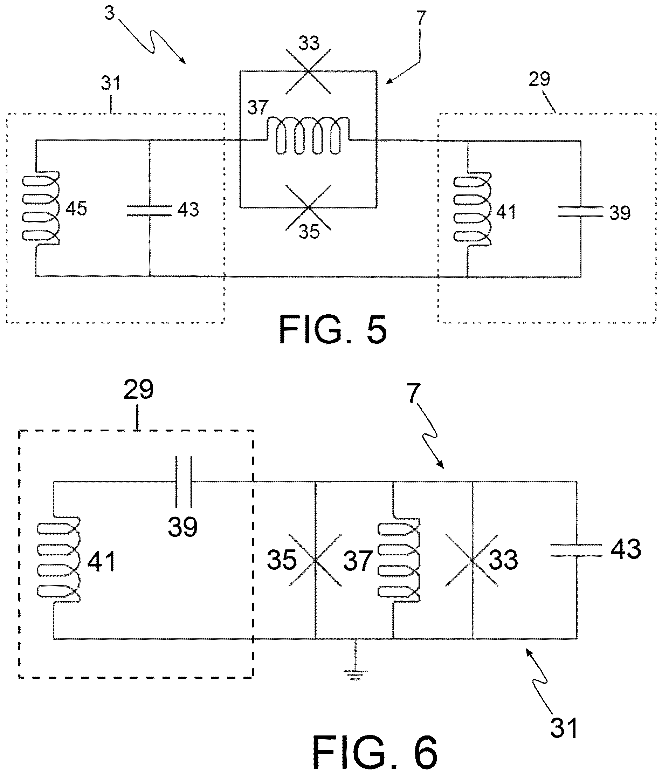

Figures 4 and 5 illustrate electrical equivalent diagrams of respective embodiments of the non-linear superconducting quantum circuit 3 which takes the form of a galvanic circuit.

Such electrical equivalent diagrams are partial since they both only represent the ATS 7 and the at least resonant portion 9, and thus represent neither the linear coupler 23 nor the electromagnetic filter 25.

More particularly, the at least one resonant portion 9 includes a first resonant portion 29 and a second resonant portion 31.

The ATS 7 is realized as known in the art, for example in R. Lescanne *et al.* (2020). The ATS 7 includes a first Josephson junction 33 and a second Josephson junction 35 in parallel, and an inductive element 37 in parallel between them. As a result, the ATS 7 has two connected loops, each loop comprising a respective Josephson junction 33, 35 in parallel with the inductive element 37. The inductive element 37 can be realized either geometrically or with a chain of junctions. The ATS 7 has both of its loops flux biased in DC and AC. The DC bias sets the working point of the ATS 7. It may be operated near the so-called saddle point, which is a sweet spot in frequency and has small cross-Kerr terms.

Both the first resonant portion 29 and the second resonant portion 31 are galvanically coupled to the ATS 7. The first resonant portion 29 confers the memory mode a having the resonant frequency $f_a$ to the non-linear superconducting quantum circuit 3, while the second resonant portion 31 confers the buffer mode b having the resonant frequency $f_b$ to the non-linear superconducting quantum circuit 3.

By "galvanically coupled", it should be understood here that there are short electrically conducting portions which connect the first resonant portion 29 and the second resonant portion 31 to the ATS 7, i.e., a short electrically conducting track or any other mean ensuring a physically continuous conducting junction. The expression "short" means that the electrically conducting track has an impedance which is negligeable compared to the impedance of the ATS 7, as well as the first resonant portion 29 and the second resonant portion 31 at the resonant frequencies $f_a$ and $f_b$ respectively. These short electrically conducting portions correspond to the linear coupler 15.

In the embodiment of figure 4, the first resonant portion 29 includes a capacitive element 39 and an inductive element 41 which are connected in series. Similarly, the second resonant portion 31 includes a capacitive element 43 and an inductive element 45 which are connected in series.

In the embodiment of figure 5, the first resonant portion 29 also includes the capacitive element 39 and the inductive element 41. However, in such an embodiment, the capacitive element 39 and the inductive element 41 are connected in parallel. Similarly, the capacitive element 43 and the inductive element 45 of the second resonant portion 31 are connected in parallel.

In the respective embodiments of figures 4 and 5, the non-linear superconducting quantum circuit 3 includes two resonant portions 29 and 31. However, as previously explained, the non-linear superconducting quantum circuit 3 may comprise only one resonant portion 9 arranged to produce both the memory mode a and the buffer mode b.

Figure 6 illustrates an electrical equivalent diagram of an embodiment of the non-linear superconducting quantum circuit 3 which takes the form of a galvanic circuit.

Such a circuit can be described as "minimal" in that it involves as few elements as possible to have the memory mode a and the buffer mode b: two capacitive elements 39 and 43 and two inductive elements 41 and 7.

While the first resonant portion 29 is unchanged compared to that of figure 4 since the first resonant portion 29, which confers the memory mode a to the non-linear superconducting quantum circuit 3, still includes a capacitive element 39 and an inductive element 41 connected in series, the ATS 7 now plays both the role of inductive element to produce the buffer mode b and four-wave mixing non-linear element to generate the 2-to-1 photon exchange. In other words, the ATS 7 replaces the inductive element 45 of the embodiments of figures 4 and 5 in the second resonant portion 31.

Similarly, it is possible to use the ATS 7 as the inductive element of the first resonant portion 29 instead of the inductive element 41.

A.3.2 Capacitive example implementation

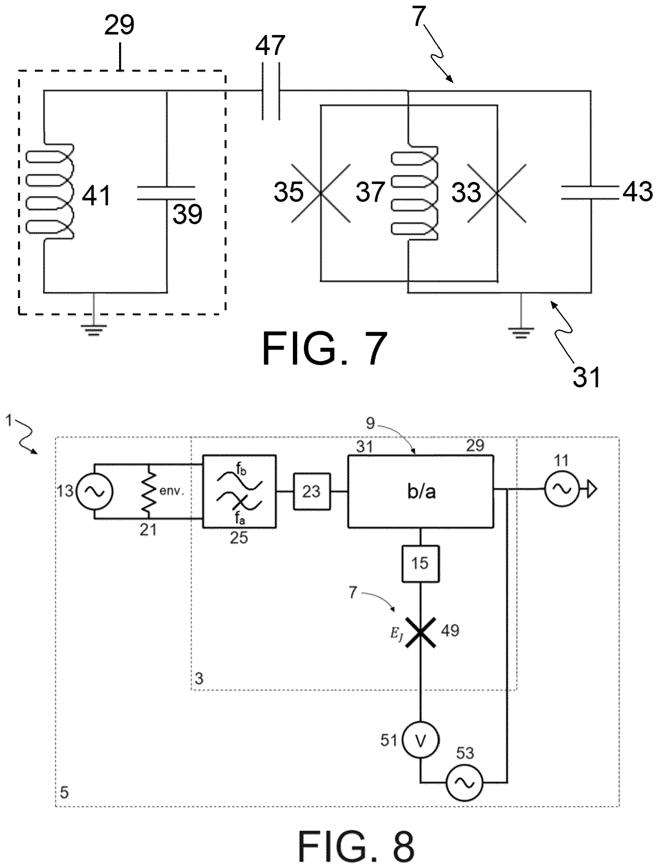

Figure 7 illustrates an electrical equivalent diagram of an embodiment of the non-linear superconducting quantum circuit 3 which takes the form of a capacitive circuit.

Again, such an electrical equivalent diagram is partial since it only represents the ATS 7 and the at least one resonant portion 9, and thus represents neither the linear coupler 23 nor the electromagnetic filter 25. More particularly, the at least one resonant portion 9 includes the first resonant portion 29 and the second resonant portion 31.

Compared to the galvanic circuits of figures 4, 5 and 6, the same reference signs have been kept for ease of understanding.

The first resonant portion 29 is capacitively coupled to the second resonant portion 31. More particularly, the first resonant portion 29 and the second resonant portion 31 are coupled together via a capacitive element 47.

Like the galvanic circuit of figure 6, the capacitive circuit can be described as "minimal" in that it involves as few elements as possible to have the memory mode a and the buffer mode b: two capacitive elements 39 and 43 and two inductive elements 41 and 7.

A.4 Quantum system - DC dissipative stabilization

Figure 8 illustrates an embodiment in which the quantum system 1 is arranged to perform the DC dissipative stabilization to stabilize a cat qubit.

The non-linear element 7 is a set of one or more Josephson junctions. In the example of figure 8, the non-linear element 7 includes only one Josephson junction 49 for the sake of simplification.

Moreover, the at least resonant portion 9 includes a first resonant portion 29 and a second resonant portion 31 which confer the memory mode a and the buffer mode b respectively to the non-linear superconducting quantum circuit 3.

Compared to the quantum system 1 of figure 3, the same reference signs have been kept for ease of understanding.

The first and second resonant portions 29, 31 take the form of a linear electromagnetic network which can be compared to that of the quantum system 1 illustrated in figure 3 and is such that, when coupled via the linear coupler 15 to the non-linear element 7, the non-linear superconducting quantum circuit 3 has the memory mode a and the buffer mode b at respective resonant frequencies $f_a$ and $f_b$ which participate in the non-linear element 7.

Similarly to the quantum system 1 of figure 3, the electromagnetic radiation source 11 - which can be a microwave radiation source - is arranged to deliver electromagnetic radiation at the resonant frequency $f_a$ to the first resonant portion 29 to drive the memory mode a; and the electromagnetic radiation source 13 - which can be a microwave radiation source - is arranged to deliver electromagnetic radiation at the resonant frequency $f_b$ to the second resonant portion 31 to drive the buffer mode b.

The buffer mode b is selectively coupled to the load 21 via the linear coupler 23 and the electromagnetic filter 25 - which can be a microwave filter - configured as a band pass filter with a frequency $f_b$.

Again, the electromagnetic filter 25 may be configured as a band stop filter at a frequency $f_a$ and may be placed in between, on the one hand, the external environment and, on the other hand, the memory mode a and the buffer mode b to isolate the memory mode a and thus prevent the memory mode a from suffering additional losses coming from unwanted coupling to the load 21.

It may also be configured as a low-pass (respectively high-pass) filter if $f_a > f_b$ (respectively $f_b > f_a$). In other embodiments, the electromagnetic filter 25 can be omitted when coupling between the load 21 and substantially only the buffer mode b can be established. The skilled person thus understands that the memory mode a has a high-quality factor while the buffer mode b has a low-quality factor.

Compared to the quantum system 1 of figure 3, the command circuit 5 does not comprise anything functionally comparable to the two-photon pump 17, the electromagnetic network 19 or electromagnetic radiation source 27. Instead, the command circuit 5 comprises the DC voltage source 51 and the electromagnetic radiation source 53 - which can be a microwave radiation source - to perform the 2-to-1 photon exchange between the memory mode a and the buffer mode b.

The DC voltage source 51 is arranged to bias the non-linear element 7 with the delivered DC voltage having a value inducing an electromagnetic oscillation having a frequency substantially equal to $|2f_a - f_b|$ in the non-linear superconducting quantum circuit 3.

The electromagnetic radiation source 53 - which can be a microwave radiation source - is arranged to deliver electromagnetic radiation at a frequency substantially equal to the frequency of the electromagnetic oscillation induced by the DC voltage source 51 to cause injection locking thereof. Such an injection locking is particularly useful when the DC voltage source 51 is not an ideal DC voltage source, i.e. when the DC voltage source 51 induces voltage noise.

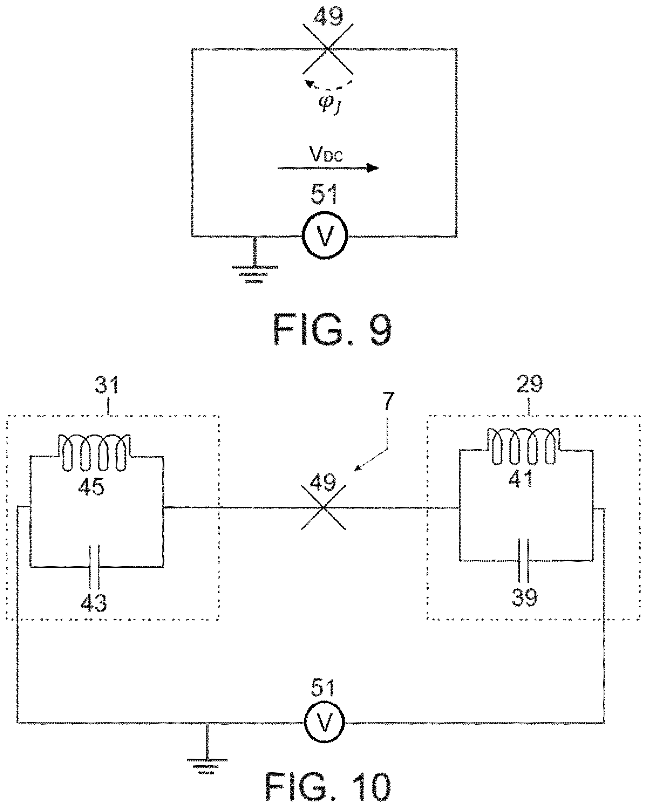

The DC dissipative stabilization is only one of the stabilization schemes concerned by the invention; consequently, the principle of the DC dissipative stabilization is explained briefly below with reference to figure 9.

Figure 9 shows a simplified circuit in which a DC voltage source 51 and a Josephson junction 49 are connected in series. In this figure, the first resonant portion 29 and the second resonant portion 31 are absent from this circuit in order to only illustrate the interaction between the DC voltage source 51 and the Josephson junction 49.

As illustrated in figure 9, the DC voltage source 51 delivers a constant voltage $V_{DC}$ across the Josephson junction 49. The phase of the Josephson junction 49 is denoted $\varphi_J$.

At this stage, for simplicity, we can consider that the DC voltage source 13 is ideal, which means that the operation of the DC voltage source 51 does not generate voltage noise. An ideal DC voltage source can itself be made with a Josephson junction.

The Cooper pairs - also known as BCS pairs (Bardeen-Cooper-Schrieffer pairs) -, which are pairs of electrons bound together at low temperatures, travel the circuit with an energy equal to $2eV_{DC}$, where e is the elementary charge.

In the environment set up by the Josephson junction 49, such an energy $2eV_{DC}$ is converted into photons with an angular frequency $\omega_{DC}$ equal to $2eV_{DC}/\hbar$. It can thus be considered that the Josephson junction 49 acts as a "voltage-to-frequency converter".

Consequently, the circuit of figure 9 can be described with the following differential equation:

$$\dot{\varphi}_J = \frac{2e}{\hbar} V_{DC} = \omega_{DC}$$

Since the DC voltage $V_{DC}$ is constant over the time, the time evolution of the phase $\varphi_J$ can be expressed as follows:

$$\varphi_J(t) = \omega_{DC} t + \varphi_{J_0}$$

where: $\varphi_{J0}$ is the initial value of the phase $\varphi_J$, $\varphi_{J0} = \varphi_J(0)$.

The phase $\varphi_J$ thus varies linearly with time.

Nonetheless, the non-linear superconducting quantum circuit 3 of the quantum system 1 further comprises, in addition to the Josephson junction 49, the first resonant portion 27 corresponding to the memory mode a having a zero-point phase fluctuation $\varphi_a$ as well as the second resonant portion 29 corresponding to the buffer mode b having a zero-point phase fluctuation $\varphi_b$.

The value $V_{DC}$ of the DC voltage induces an electromagnetic oscillation having an angular frequency $\omega_{DC}$ such that $\omega_{DC} = \frac{2e}{\hbar} V_{DC}$. Yet, since the DC voltage source 13 is intended to perform the 2-to-1 photon exchange which is usually obtained with parametric pumping at a frequency $|2f_a - f_b|$, the value $V_{DC}$ must be set such that the frequency $f_{DC}$ is equal to $|2f_a - f_b|$.

Therefore:

$$f_{DC} = \omega_{DC}/2\pi = \frac{1}{2\pi}\frac{2e}{\hbar} V_{DC}$$

Then, since the reduced Planck constant $\hbar$ is defined as $\hbar = \frac{h}{2\pi}$ :

$$f_{DC} = \frac{2e}{h} V_{DC} = |2f_a - f_b|$$

Then:

$$V_{DC} = |2f_a - f_b|\frac{h}{2e}$$

The DC dissipative stabilization allows to obtain a two-photon coupling rate which is not determined - and thus limited - by the amplitude of any parametric pump:

$$g_2 = \frac{E_J}{4} \varphi_a^2 \varphi_b$$

where: $E_J$ is the Josephson energy of the Josephson junction 49.

In the case where the non-linear element 7 includes N Josephson junctions, where N is a strictly positive natural number, the value $V_{DC}$ of the DC voltage in order to induce an electromagnetic oscillation having a frequency substantially

equal to $|2f_a - f_b|$ in the non-linear superconducting quantum circuit 3 is the following:

$$V_{DC} = N|2f_a - f_b|\frac{h}{2e}$$

The quantum system 1 of figure 8 can take the form of a galvanic circuit or a capacitive circuit. Both are briefly detailed hereinafter.

A.4.1 Galvanic example implementation

Figure 10 illustrates an electrical equivalent diagram of an embodiment of the quantum system 1 of figure 8 which takes the form of a galvanic circuit.

Reference is made here to "quantum system 1" and not just to "non-linear superconducting quantum circuit 3" because the DC voltage source 51 is shown, and therefore part of command circuit 5.

Such an electrical equivalent diagram is partial since it only represents the non-linear element 7 - and more particularly the Josephson junction 49 -, the first resonant portion 29, the second resonant portion 31 and the DC voltage source 51, and thus represents neither the linear coupler 15 nor the electromagnetic filter 25.

It should also be noted that the injection locking is ignored here, and therefore that the electromagnetic radiation source 53 is not taken into account.

Both the first resonant portion 29 and the second resonant portion 31 are galvanically coupled to the Josephson junction 49.

In the embodiment of figure 10, the first resonant portion 29 includes the capacitive element 39 and the inductive element 41 connected in parallel. Similarly, the second resonant portion 31 includes the capacitive element 43 and the inductive element 45 connected in parallel.

A.4.2 Capacitive example implementation

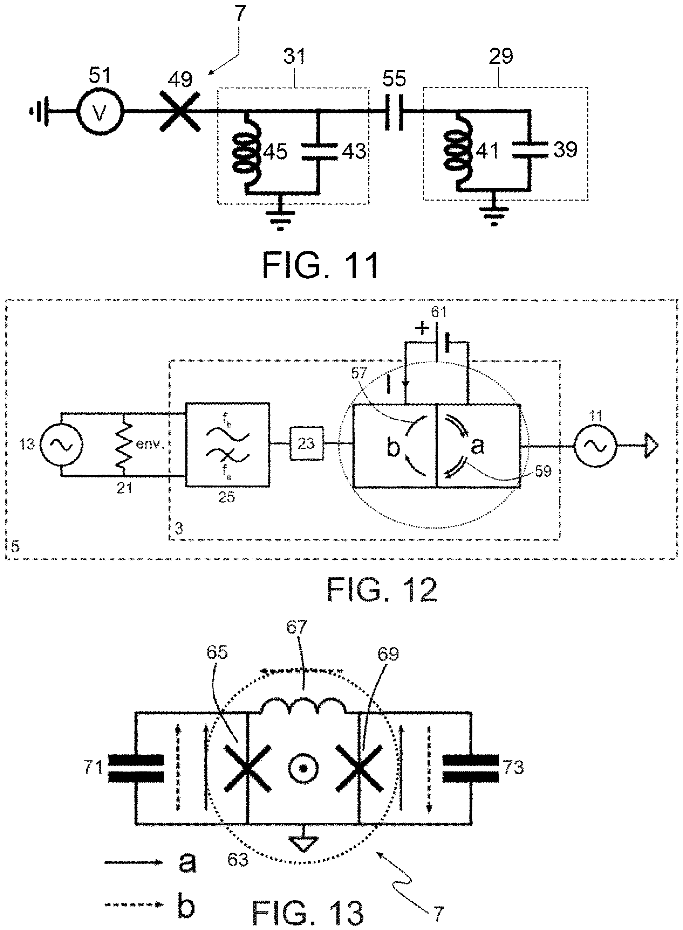

Figure 11 illustrates an electrical equivalent diagram of an embodiment of the quantum system 1 of figure 8 which takes the form of a capacitive circuit.

Similarly to figure 10, such an electrical equivalent diagram is partial and only represents the non-linear element 7 - which still comprises only one Josephson junction 49 -, the first resonant portion 29, the second resonant portion 31 and the DC voltage source 51, and thus represents neither the linear coupler 15 nor the electromagnetic filter 25.

Once again, the injection locking is ignored here, and the electromagnetic radiation source 53 is not taken into account.

In figure 11, the first resonant portion 29 still includes the capacitive element 39 and the inductive element 41 while the second resonant portion 31 still includes the capacitive element 43 and the inductive element 45.

It must be noted that the first resonant portion 29 is strongly capacitively coupled to the Josephson junction 49 through a capacitive element 55, whereas the second resonant portion 31 is galvanically coupled to the Josephson junction 49. The capacitive element 55 and the short electrically conducting portion connecting respectively the first resonant portion 29 and the second resonant portion 31 to the Josephson junction 49 correspond to the linear coupler 15 of figure 8.

It must also be noted that the second resonant portion 31 can also be capacitively coupled to the Josephson junction 49, whether the first resonant portion 29 and the Josephson junction 49 are galvanically or capacitively coupled.

A.5 Quantum system - resonant dissipative stabilization

Figure 12 illustrates an embodiment in which the quantum system 1 is arranged to perform resonant dissipative stabilization to stabilize a cat qubit.

The non-linear element 7 is a three-wave mixing non-linear element 7.

The non-linear element 7 and the at least one resonant portion 9 are brought together to form part of the non-linear superconducting quantum circuit 3, which explains why the reference signs "7" and "9" are absent from figure 12.

The non-linear superconducting quantum circuit 3 is arranged to perform intrinsically the 2-to-1 photon exchange - symbolized here by a back-and-forth single arrow 57 and double arrows 59 - between the memory mode a and the buffer mode b.

Similarly to the quantum system 1 of figure 3 or figure 8, the electromagnetic radiation source 11 - which can be a microwave radiation source - is arranged to deliver electromagnetic radiation at the resonant frequency $f_a$ to the first resonant portion 29 to drive the memory mode a; and the electromagnetic radiation source 13 - which can be a microwave radiation source - is arranged to deliver electromagnetic radiation at the resonant frequency $f_b$ to the second resonant portion 31 to drive the buffer mode b.

The buffer mode b is selectively coupled to the load 21 via the linear coupler 23 and the electromagnetic filter 25 - which can be a microwave filter - configured as a band pass filter with a frequency $f_b$.

Again, the electromagnetic filter 25 may be configured as a band stop filter at a frequency $f_a$ and may be placed in between, on the one hand, the external environment and, on the other hand, the memory mode a and the buffer mode b to isolate the memory mode a and thus prevent the memory mode a from suffering additional losses coming from unwanted coupling to the load 21.

It may also be configured as a low-pass (respectively high-pass) filter if $f_a > f_b$ (respectively $f_b > f_a$). In other embodiments, the electromagnetic filter 25 can be omitted when coupling between the load 21 and substantially only the buffer mode b can be established. The skilled person thus understands that the memory mode a has a high-quality factor while the buffer mode b has a low-quality factor.

The command circuit 5 further comprises a current source 61 connected via wires to the non-linear element 7 and the at least one resonant portion 9.

The current source 61 is arranged to deliver current which flows through one or more components of the non-linear superconducting quantum circuit 3. The current source 61 is configured to both allow three-wave mixing interaction and to tune the frequency matching condition $2f_a = f_b$.

Figure 13 shows a possible circuit to realize the three-wave mixing non-linear element 7.

The three-wave mixing non-linear element 7 is formed by at least one loop 63 including a first Josephson junction 65, a central inductive element 67 and a second Josephson junction 69.

When a predetermined current of a constant intensity is applied by the current source 61, the resonant frequency $f_b$ is substantially equal to twice the resonant frequency $f_a$. The circuit shown in figure 13 is particularly configured to discriminate symmetrically the memory mode a and the buffer mode b. The high symmetry of such a circuit achieves an improved quality of the 2-to-1 photon exchange.

The central inductive element 67 can be an inductance, a single Josephson junction or an array of Josephson junctions. The central inductive element 67 may thus be arranged between the first Josephson junction 65 and the second Josephson junction 69 as a loop in series. The arrangement in series may comprise a first inner node connecting a pole of the first Josephson junction 65 with a pole of the central inductive element 67. The arrangement in series may also comprise a second inner node connecting a pole of the second Josephson junction 69 with another pole of the central inductive element 67. The arrangement in series may also comprise a closed-loop node connecting another pole of the first Josephson junction 65 with another pole of the second Josephson junction 69.

The at least one loop 63 may be connected to a common ground via the closed-loop node. The circuit may also comprise a first capacitive element 71 and a second capacitive element 73. The first capacitive element 71 may be connected in parallel with the first Josephson junction 65 between the common ground and the first inner node of the loop. The second capacitive element 73 may be connected in parallel with the second Josephson junction 69 between the common ground and the second inner node of the loop.

The first Josephson junction 65 and the second Josephson junction 69 are substantially identical and the capacitive elements 71 and 73 are also substantially identical. Hence, the symmetry of the circuit implies that the memory mode a is the symmetric superposition of the two resonators (as shown by the full arrows) and the buffer mode b is the anti-symmetric superposition of the two resonators (as shown by the dashed arrows). It can be noticed that only the buffer mode b has a contribution across the central inductive element 67 which is advantageously used to preferentially couple the external environment to this buffer mode b while isolating the memory mode a from the external environment.

B. Phases and phase shifts in a quantum system

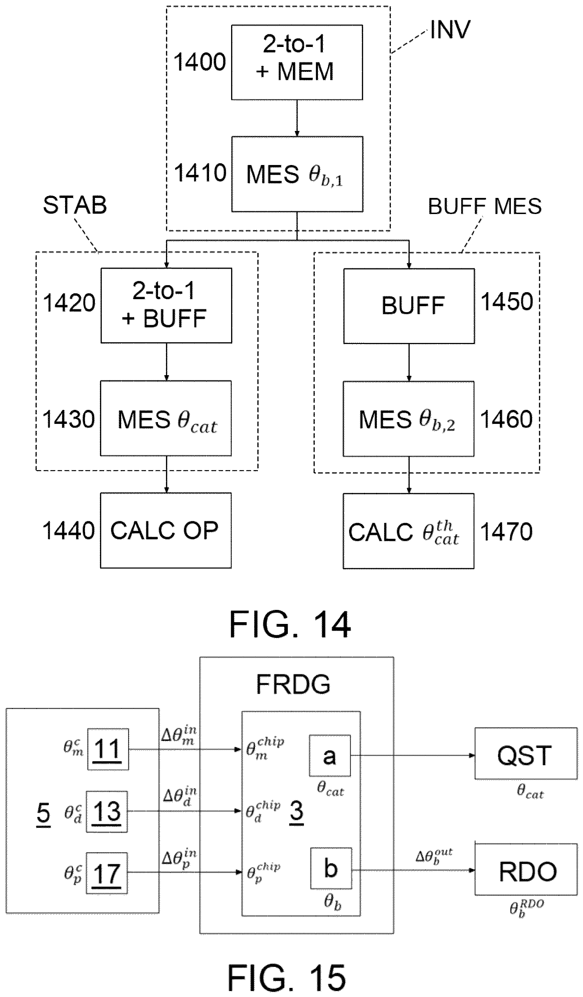

A method of characterizing the generic quantum system of figure 2 will now be described with reference to figure 14.

It should be understood here that such a characterization method can be implemented to characterize any quantum system which constitutes an embodiment of the generic quantum system of figure 2. For example, this characterization method can be used to characterize the quantum system 1 of figure 3, figure 8 or figure 12.

The characterization method can be used to:

(i) determine a remarkable operating parameter of the quantum system with a single quantum state tomography, which remarkable operating parameter makes it possible to adjust the phase of the cat qubit stabilized in the memory mode a throughout the experiment without having to perform a new quantum state tomography; or

(ii) determine the phase of a cat qubit to be subsequently stabilized in the memory mode a with indirect measurements, therefore without having to perform the stabilization and without quantum state tomography.

Both goals (i) and (ii) will be described in more detail below.

The characterization method relies on how the control parameters of the sources of the command circuit 5 impact or affect the non-linear superconducting quantum circuit 3, and more particularly the quantum states stabilized in the memory mode a and/or generated in the buffer mode b. The source control parameters include the respective phases of the sources, i.e. at least the respective phases of the memory drive 11 and the buffer drive 13.

For the sake of conciseness, the characterization method is described below using the quantum system 1 of figure 3, i.e. the quantum system 1 arranged to implement parametric dissipative stabilization to stabilize a cat qubit. In such a case, the source control parameters include, in addition to the respective phases of the memory drive 11 and the buffer drive 13, the phase of the two-photon-pump 17.

Figure 15 schematically illustrates the quantum system 1 of figure 3 with the various phases involved.

In the command circuit 5, the memory drive 11, the buffer drive 13 and the two-photon pump 17 each have a controllable respective phase $\theta_m^c$, $\theta_d^c$ and $\theta_p^c$.

The phase of a source, whether the memory drive 11, the buffer drive 13 or the two-photon pump 17, corresponds to the phase of the complex amplitude of the electromagnetic pulse it emits. For example, when the memory drive 11 is turned on, it emits an electromagnetic pulse whose variation as a function of time $t$ is of the following form :

$$\epsilon_m(t) = \epsilon_m e^{i\omega_m t} + \mathrm{h.c.}$$

where: $\varepsilon_m$ is the complex amplitude of the memory drive 11, and $\omega_m$ is the angular frequency of the memory drive 11. The amplitude and phase of the memory drive 11 correspond to the amplitude and phase of the complex number $\varepsilon_m$ respectively. In other words, $\theta_m^c$ is the phase of the complex number $\varepsilon_m$.

Likewise, the phase $\theta_d^c$ of the buffer drive 13 is the phase of the complex amplitude of the electromagnetic pulse it emits:

$$\epsilon_d(t) = \epsilon_d e^{i\omega_d t} + \mathrm{h.c.}$$

where: $\varepsilon_d$ is the complex amplitude of the buffer drive 13, and $\omega_d$ is the angular frequency of the buffer drive 13.

Finally, the phase $\theta_p^c$ of the two-photon pump 17 is the phase of the complex amplitude of the electromagnetic pulse it emits:

$$\epsilon_p(t) = \epsilon_p e^{i\omega_p t} + \mathrm{h.c.}$$

where: $\varepsilon_p$ is the complex amplitude of the two-photon pump 17, and $\omega_p$ is the angular frequency of the two-photon pump 17.

The memory drive 11, the buffer drive 13 and the two-photon pump 17 are electromagnetic radiation sources - typically microwave radiation sources - connected to the non-linear superconducting quantum circuit 3 by cables, which induce a phase shift whose value is *a priori* unknown and depends in particular on the hardware or the cable length. In particular, the cable connecting the memory drive 11 to the non-linear superconducting quantum circuit 3 induces a phase shift $\Delta\theta_m^{in}$, the cable connecting the buffer drive 13 to the non-linear superconducting quantum circuit 3 induces a phase shift $\Delta\theta_d^{in}$, and the cable connecting the two-photon pump 17 to the non-linear superconducting quantum circuit 3 induces a phase shift $\Delta\theta_p^{in}$.

The phase shift results in the phase at the non-linear superconducting quantum circuit 3 differing from that at the corresponding source. In figure 15, the non-linear superconducting quantum circuit 3 takes the form of a chip within a refrigerator ("FRDG"). The phases $\theta_m^{chip}$, $\theta_d^{chip}$ and $\theta_p^{chip}$ corresponding to the memory drive 11, the buffer drive 13 and the two-photon pump 17 respectively at the non-linear superconducting quantum circuit 3 thus satisfy the following formulae:

$$\theta_m^{chip} = \theta_m^c + \Delta\theta_m^{in}$$

$$\theta_d^{chip} = \theta_d^c + \Delta\theta_d^{in}$$

$$\theta_p^{chip} = \theta_p^c + \Delta\theta_p^{in}$$

Furthermore, the characterization method involves measurements, and more precisely measuring the phase of a cat qubit stabilized in the memory mode a and/or measuring the phase of a quantum state generated in the buffer mode b.

The phase of a cat qubit can also be referred to as the "phase of the cat state" or even the "cat angle".

The phase of a cat qubit stabilized in the memory mode a is measured using direct quantum state tomography, while the phase of a quantum state generated in the buffer mode b is measured using a readout that requires a cable. In other words, the phase $\theta_{cat}$ of the cat qubit measured with quantum state tomography is that at the memory mode a, while the measured phase $\theta_b^{RDO}$ of the quantum state differs from that $\theta_b$ at the buffer mode b due to a phase shift $\Delta\theta_b^{out}$ induced by the corresponding cable. In other words :

$$\theta_b^{RDO} = \theta_b + \Delta\theta_b^{out}$$

Here, "RDO" stands for "readout".

B.1 "Inverse measurement"

Reference is again made to figure 14, and in particular to the part of the characterization method bounded by the dashed line labelled "INV". This part of the characterization method relates to a generation of a state in the buffer mode b and a measurement. This "INV" part of the characterization method is always implemented, whether the goal pursued is goal (i) or goal (ii) as defined above in section B.

The state generated in the buffer mode b refers to a quantum state - coherent or not - whose phase can be measured.

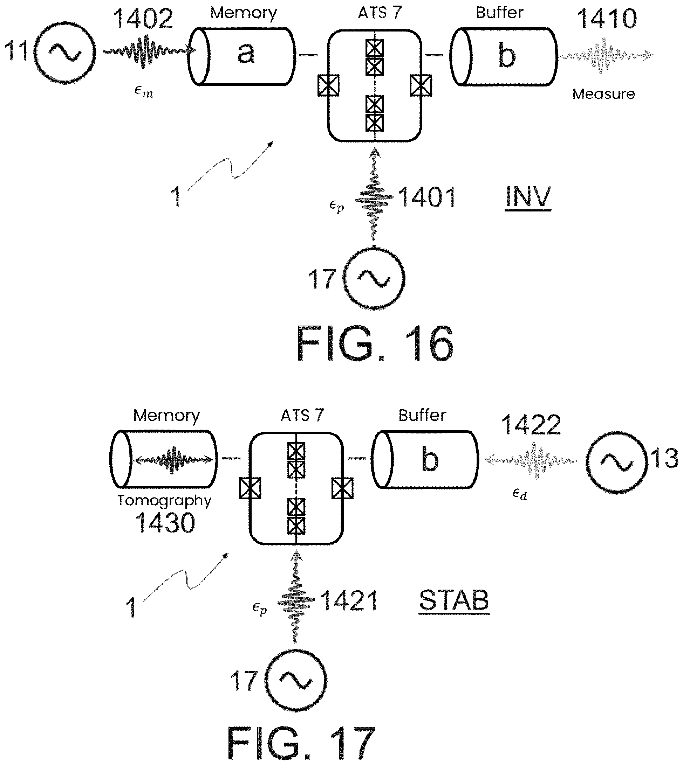

This measurement - hereinafter "inverse measurement" - is illustrated in figure 16.

In an operation 1400, the command circuit 5 stimulates the non-linear superconducting quantum circuit 3 to perform such an inverse measurement. The operation 1400 comprises a sub-operation 1401 and a sub-operation 1402 implemented concurrently.

In the sub-operation 1401, the two-to-one photon exchange between the memory mode a and the buffer mode b is engineered. In the example shown in figures 15 and 16, such a two-to-one photon exchange is achieved by turning on the two-photon pump 17. As explained above in subsection A.3, the two-photon pump 17 delivers electromagnetic radiation at a frequency substantially equal to $|2f_a - f_b|$ to the ATS 7. The two-photon phase $\theta_p^c$ is set.

In the sub-operation 1402, the memory drive 11 is turned on. As explained above in subsection A.2, the memory drive 11 delivers electromagnetic radiation at a frequency substantially equal to $f_a$ to the at least one resonant portion 9. The memory phase $\theta_m^c$ is set.

It should be noted that the buffer drive 13 is turned off throughout the operation 1400.

The operation 1400 results in the non-linear superconducting quantum circuit 3 to generate a first buffer state in the buffer mode b.

The equations of motion for the buffer-memory system are as follows:

$$\partial_t \alpha = -2ig_2\alpha^*\beta - i\epsilon_m$$

$$\partial_t \beta = -\frac{\kappa_b}{2}\beta - ig_2^*\alpha^2$$

where: - $\alpha$ and $\beta$ are the memory state and the buffer state respectively,

- $g_2$ is the two-photon coupling rate, and
- $\kappa_b$ is the buffer dissipation rate.

Consequently, the buffer-memory system has the following unique steady state:

$$\alpha = -i \frac{\epsilon_m}{\frac{4|g_2|^2}{\kappa_b}|\alpha|^2}$$

$$\beta = -\frac{2ig_2^*}{\kappa_b}\alpha^2$$

The phase $\theta_{b,1}$ of the first buffer state can be expressed as follows:

$$\theta_{b,1} = -\frac{\pi}{2} - \theta_p^{chip} + 2\theta_m^{chip}$$

In an operation 1410, a readout of the buffer is performed.

It is known to the skilled person that various techniques can be used to perform a buffer readout. For example, heterodyne detection on the buffer mode b can be performed. Alternatively, homodyne detection on the buffer mode b can be performed.

In view of figure 15 and the corresponding phase equations involving the phase shifts, the preceding equation can be written as follows:

$$\theta_{b,1}^{RDO} = -\frac{\pi}{2} + \left(-\theta_p^c + 2\theta_m^c\right) + \left(-\Delta\theta_p^{in} + 2\Delta\theta_m^{in}\right) + \Delta\theta_b^{out}$$

The readout of the buffer therefore outputs the measured phase $\theta_{b,1}^{RDO}$.

B.2 Cat qubit stabilization and quantum state tomography

Reference is again made to figure 14, and in particular to the part of the characterization method bounded by the dashed line labelled "STAB". This part of the characterization method relates to a stabilization of a cat qubit in the memory mode a and a measurement of its phase, and is implemented when the goal pursued is goal (i) as defined above in section B.

Those stabilization and measurement are illustrated in figure 17.

In an operation 1420, the command circuit 5 stimulates the non-linear superconducting quantum circuit 3 to stabilize a cat qubit in the memory mode a. The operation 1420 comprises a sub-operation 1421 and a sub-operation 1422 implemented concurrently.

In the sub-operation 1421, the two-to-one exchange between the memory mode a and the buffer mode b is engineered. In the example shown in figures 15 and 17, such a two-to-one photon exchange is achieved by turning on the two-photon pump 17. As explained above in subsection A.3, the two-photon pump 17 delivers electromagnetic radiation at a frequency substantially equal to $|2f_a - f_b|$ to the ATS 7. The two-photon phase $\theta_p^c$ is substantially the same as that of sub-operation 1401.

By "substantially the same" it should be understood here that the source control parameter is ideally not modified, either automatically or by the operator. However, in practice, a source control parameter is likely to fluctuate over time, typically by 1 or even 5%.

In the sub-operation 1422, the buffer drive 13 is turned on. As explained above in subsection A.2, the buffer drive 13 delivers electromagnetic radiation at a frequency substantially equal to $f_b$ to the at least one resonant portion 9. The buffer phase $\theta_d^c$ is set. The operation 1420 results in the non-linear superconducting quantum circuit 3 to stabilize a cat qubit in the memory mode a.

In an operation 1430, a quantum state tomography is performed.

The quantum state tomography is, for example, a Wigner tomography. Alternatively, the quantum state tomography can be a Husimi distribution tomography. The Husimi distribution is a smoothed version of the Wigner distribution; the Husimi distribution tomography is easier to implement than the Wigner one, but gives less complete results on the quantum state measured.

To this end, the memory drive 11 is turned on. As explained above in subsection A.2, the memory drive 11 delivers electromagnetic radiation at a frequency substantially equal to $f_a$ to the at least one resonant portion 9. The memory phase

$\theta_m^c$ is substantially the same as that of sub-operation 1401.

The equations of motion of the buffer-memory system are as follows:

$$\partial_t \alpha = -2ig_2 \alpha^* \beta$$

$$\partial_t \beta = -\frac{\kappa_b}{2}\beta - ig_2^* \alpha^2 - i\epsilon_d$$

Consequently, the buffer-memory system has the following non-trivial steady state:

$$\alpha^2 = -\frac{\epsilon_d}{g_2^*}$$

$$\beta = 0$$

The phase $\theta_{cat}$ of the cat qubit stabilized in the memory mode a can be expressed as follows:

$$\theta_{cat} = \frac{\pi}{2} + \frac{1}{2}\theta_p^{chip} + \frac{1}{2}\theta_d^{chip} - \theta_m^{chip}$$

In view of figure 15 and the corresponding phase equations involving the phase shifts, the preceding equation can be written as follows:

$$\theta_{cat} = \frac{\pi}{2} + \frac{1}{2}\left(\theta_p^c + \theta_d^c - 2\theta_m^c\right) + \frac{1}{2}\left(\Delta\theta_p^{in} + \Delta\theta_d^{in} - 2\Delta\theta_m^{in}\right)$$

It should be noted that the cat qubit phase $\theta_{cat}$ is an affine function of the buffer phase $\theta_d^c$. In other words, the above equation can be rewritten as follows to show such an affine function:

$$\theta_{cat} = \frac{1}{2}\theta_d^c + c$$

In such an equation, the cat qubit phase $\theta_{cat}$ is known since it is measured with quantum state tomography, as well as the buffer phase $\theta_d^c$ which is set.

On the other hand, the intercept c is *a priori* unknown. Indeed, the intercept c is expressed as follows:

$$c = \frac{\pi}{2} + \frac{1}{2}\left(\theta_p^c - 2\theta_m^c\right) + \frac{1}{2}\left(\Delta\theta_p^{in} + \Delta\theta_d^{in} - 2\Delta\theta_m^{in}\right)$$

The intercept c has thus a known part, i.e. the two-photon phase $\theta_p^c$ and the memory phase $\theta_m^c$ which are set, and an unknown part, i.e. the phase shifts $\Delta\theta_m^{in}, \Delta\theta_d^{in}$ and $\Delta\theta_p^{in}$ The intercept c can be calculated as follows:

$$c = \theta_{cat} - \frac{1}{2}\theta_d^c$$

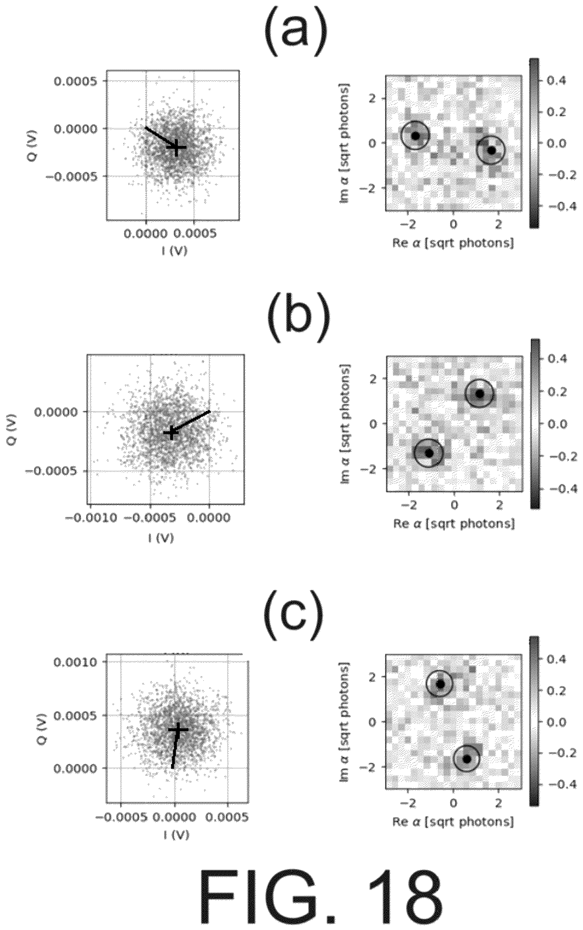

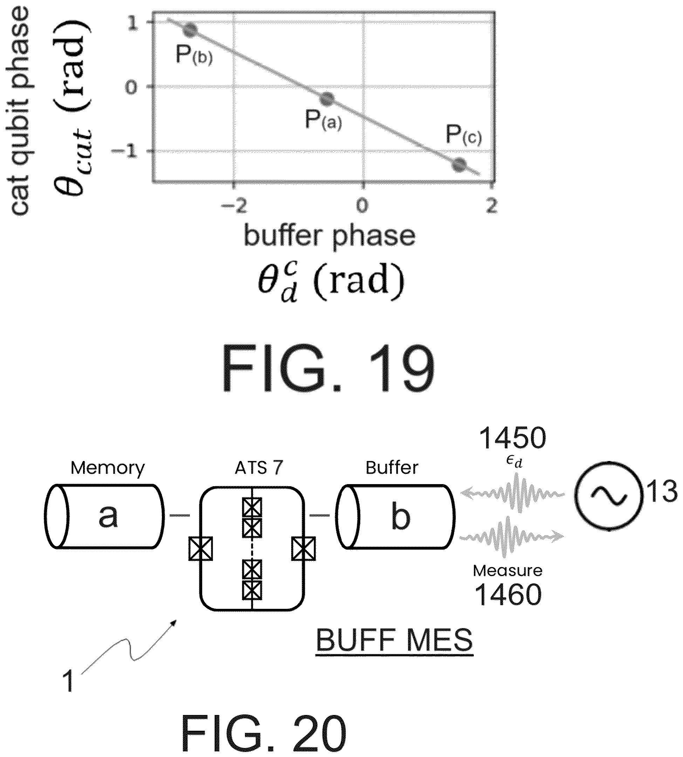

Figures 18 and 19 illustrate the affine relationship between the cat qubit phase $\theta_{cat}$ and the buffer phase $\theta_d^c$.

Figure 18 comprises three diagrams (a), (b) and (c). Each diagram shows, on the left, a readout of the buffer as performed in operation 1410 and, on the right, a Wigner tomography as performed in operation 1430. Each diagram gives a pair of buffer phase $\theta_d^c$ - cat qubit phase $\theta_{cat}$ values.

The respective Wigner tomographies in diagrams (a), (b) and (c) correspond to different cat sizes. In diagram (a), the Wigner tomography is that of a cat qubit with 2.9 photons on average; in diagram (b), the Wigner tomography is that of a cat qubit with 3.0 photons on average; and, in diagram (c), the Wigner tomography is that of a cat qubit with 3.1 photons on average.

Figure 19 shows the evolution of the cat qubit phase $\theta_{cat}$ as a function of the buffer phase $\theta_d^c$. This curve is plotted from three points, each corresponding to one of the diagrams in figure 18. Point $P_{(a)}$ corresponds to diagram (a), point $P_{(b)}$ corresponds to diagram (b), and point $P_{(c)}$ corresponds to diagram (c).

Figure 19 shows that the cat qubit phase $\theta_{cat}$ is an affine function of the buffer phase $\theta_d^c$. In this case, the affine function is as follows:

$$\theta_{cat} = \frac{1}{2}\theta_d^c - 0.478$$

Therefore, the intercept c is:

$$c = -0.478 \, \text{rad}$$

It should be noted that, in practice, only one readout of the buffer and one quantum state tomography are necessary, since the slope of such an affine function is known from theory; such a slope is equal to 0.5.

The role of the intercept c will be explained below.

In the example of figure 14, the "INV" part of the characterization method is implemented first, followed by the "STAB" part. In such a case, it is possible to switch from the configuration of figure 16 to that of figure 17 by turning on the buffer drive 13. In other words, the sub-operation 1421 is implemented by leaving the two-to-one photon exchange between the memory mode a and the buffer mode b on, and the sub-operation 1430 is implemented by leaving the memory drive 11 on.

However, it is possible to implement the "STAB" part of the characterization method first, followed by the "INV" part. In such a case, it is possible to switch from the configuration of figure 17 to that of figure 16 by turning off the buffer drive 13. In other words, the sub-operation 1401 is implemented by leaving the two-to-one photon exchange between the memory mode a and the buffer mode b on, and the sub-operation 1402 is implemented by leaving the memory drive 11 on.

In an operation 1440, an operating constant *K* of the quantum system 1 is determined.

As detailed above, the intercept *c* can be expressed as follows:

$$c = \frac{\pi}{2} + \frac{1}{2}\left(\theta_p^c - 2\theta_m^c\right) + \frac{1}{2}\left(\Delta\theta_p^{in} + \Delta\theta_d^{in} - 2\Delta\theta_m^{in}\right)$$

It follows that:

$$2c = \pi + \theta_p^c - 2\theta_m^c + \Delta\theta_p^{in} + \Delta\theta_d^{in} - 2\Delta\theta_m^{in}$$

Furthermore, with reference to subsection B.1:

$$\theta_{b,1}^{RDO} = -\frac{\pi}{2} + \left(-\theta_p^c + 2\theta_m^c\right) + \left(-\Delta\theta_p^{in} + 2\Delta\theta_m^{in}\right) + \Delta\theta_b^{out}$$

Consequently:

$$\theta_{b,1}^{RDO} + 2c = \frac{\pi}{2} + \Delta\theta_d^{in} + \Delta\theta_b^{out}$$

The phase shifts $\Delta\theta_d^{in}$ and $\Delta\theta_b^{out}$ are characteristic of the quantum system 1. Consequently, the measurement of the buffer phase $\theta_d^c$ and the calculation of the intercept c reveal together an operating constant K for quantum system 1:

$$K = \frac{\pi}{2} + \Delta\theta_d^{in} + \Delta\theta_b^{out}$$

Such an operating constant K is remarkable since it can be calculated:

$$K = \theta_{b,1}^{RDO} + 2c$$

Or, equivalently, and without the intercept c:

$$K = 2\theta_{cat} + \theta_{b,1}^{RDO} - \theta_d^c$$

Section C. below explains how this operating constant K can be used to calibrate the quantum system 1 over time.

B.3 Stimulation and measurement of buffer only

Reference is again made to figure 14, and in particular to the part of the characterization method bounded by the dashed line labelled "BUFF MES". This part of the characterization method relates to a generation of a state in the buffer mode b and a measurement of its phase, and is implemented when the goal pursued is goal (ii) as defined in section B.

As explained in subsection B.1 above, the state generated in the buffer mode b refers to a quantum state - coherent or not - whose phase can be measured.

Those stabilization and measurement are illustrated in figure 20.

In an operation 1450, the command circuit 5 stimulates the non-linear superconducting quantum circuit 3 to generate a state in the buffer mode b.

To this end, the buffer drive 13 is turned on. As explained above in subsection 1.2, the buffer drive 13 delivers electromagnetic radiation at a frequency substantially equal to $f_b$ to the at least one resonant portion 9. The buffer phase $\theta_d^c$ is set.

It should be noted that the memory drive 11 and the two-photon pump 17 are turned off throughout the operation 1450.

As explained above, the generic quantum system 1 of figure 2 can be realized according to several embodiments. Among these embodiments, the quantum system 1 of figure 12 is arranged to perform resonant dissipative stabilization. However, as detailed in subsection A.5 above, such a quantum system 1 is particular since the non-linear superconducting quantum circuit 3 intrinsically performs the 2-to-1 photon exchange. Such a 2-to-1 photon exchange cannot be deactivated. Consequently, the "BUFF MES" part of the characterization method cannot be implemented in the particular case of quantum system 1 of figure 12, and only the "STAB" part can be implemented following the "INV" part.

The operation 1450 results in the non-linear superconducting quantum circuit 3 to generate a second buffer state in the buffer mode b. As a reminder, the first buffer state is generated in the operation 1400 of the "INV" part of the characterization method described in subsection B.1 above.

In such a case, the buffer-memory system boils down to the buffer state:

$$\beta = -2i\frac{\epsilon_d}{\kappa_b}$$

The phase $\theta_{b,2}$ of the second buffer state can be expressed as follows:

$$\theta_{b,2} = \frac{3\pi}{2} + \theta_d^{chip}$$

In an operation 1460, a readout of the buffer is performed. Such an operation 1460 is similar to the operation 1410 of the "INV" part of the characterization method.

As mentioned in subsection B.1, heterodyne or homodyne detection on the buffer mode b can be performed to this end.

In view of figure 15 and the corresponding phase equations involving the phase shifts, the preceding equation can be written as follows:

$$\theta_{b,2}^{RDO} = \frac{3\pi}{2} + \theta_d^c + \Delta\theta_d^{in} + \Delta\theta_b^{out}$$

The readout of the buffer therefore outputs the measured phase $\theta_{b,2}^{RDO}$ .

In the example of figure 14, the "INV" part of the characterization method is implemented first, followed by the "BUFF MES" part. In such a case, it is possible to switch from the configuration of figure 16 to that of figure 20 by turning off the memory drive 11 and the two-photon pump 17, and by turning on the buffer drive 13.

However, it is possible to implement the "BUFF MES" part of the characterization method first, followed by the "INV" part. In such a case, it is possible to switch from the configuration of figure 20 to that of figure 16 by turning off the buffer drive 13, and by turning on the memory drive 11 and the two-photon pump 17.

In an operation 1470, the phase $\theta_{cat}^{th}$ of a theoretical cat qubit is calculated.

It should be noted that the "INV" and "BUFF MES" parts of the characterization method do not involve stabilizing a cat qubit in the memory mode a at any point. Only the "STAB" part of the characterization method detailed in subsection B.2 above involves stabilizing a cat qubit in the memory mode a.

However, as demonstrated below, the buffer readouts performed in the "INV" and "BUFF MES" parts, and more particularly in operations 1410 and 1460 respectively, are sufficient to determine the phase of a cat qubit that would be stabilized in the memory mode a by turning on the buffer drive 13 with a buffer phase $\theta_d^c$ substantially unchanged compared to operation 1450 while turning on the two-photon pump 17 with a two-photon phase $\theta_p^c$ substantially unchanged compared to sub-operation 1401.

The respective expressions of the measured phase $\theta_{b,1}^{RDO}$ of the first buffer state and the measured phase $\theta_{b,2}^{RDO}$ of the second buffer state are as follows:

$$\theta_{b,1}^{RDO} = -\frac{\pi}{2} + \left(-\theta_p^c + 2\theta_m^c\right) + \left(-\Delta\theta_p^{in} + 2\Delta\theta_m^{in}\right) + \Delta\theta_b^{out}$$

$$\theta_{b,2}^{RDO} = \frac{3\pi}{2} + \theta_d^c + \Delta\theta_d^{in} + \Delta\theta_b^{out}$$

It follows that:

$$\theta_{b,2}^{RDO} - \theta_{b,1}^{RDO} = \left(\theta_d^c + \theta_p^c - 2\theta_m^c\right) + \left(\Delta\theta_d^{in} + \Delta\theta_p^{in} - 2\Delta\theta_m^{in}\right)$$

with:

$$2\pi \equiv 0(\mathrm{mod}\ 2\pi).$$

Furthermore, with reference to subsection B.1:

$$\theta_{cat} = \frac{\pi}{2} + \frac{1}{2}\left(\theta_p^c + \theta_d^c - 2\theta_m^c\right) + \frac{1}{2}(\Delta\theta_p^{in} + \Delta\theta_d^{in} - 2\Delta\theta_m^{in})$$

Consequently, by substituting notation $\theta_{cat}^{th}$ for notation $\theta_{cat}$ to clearly distinguish the cat qubit actually stabilized in the memory mode a in operation 1420 of the "STAB" part of the characterization method from the theoretical cat qubit that would be stabilized by combining the source control parameters of the respective configurations of figures 16 and 20:

$$\theta_{b,2}^{RDO} - \theta_{b,1}^{RDO} = 2\theta_{cat}^{th} - \pi$$

Finally:

$$\theta_{cat}^{th} = \frac{1}{2}(\pi + \theta_{b,2}^{RDO} - \theta_{b,1}^{RDO})$$

Section C. hereinafter explains how this formula can be used to calibrate the quantum system 1.

C. Calibration of the quantum system

Section B. highlighted how the generic quantum system 1 of figure 2 can be characterized using the inverse measurement detailed in subsection B.1. In particular, subsections B.2 and B.3 describe two possible characterizations based on the same system of equations of the phases $\theta_{b,1}^{RDO}$, $\theta_{cat}$ and $\theta_{b,2}^{RDO}$.

The characterization of the quantum system 1 can be used to calibrate it. To this end, subsection C.1 below describes a possible calibration of the quantum system 1 based on the characterization described in subsection B.2 above, while subsection C.2 below describes a possible calibration of the quantum system 1 based on the characterization described in subsection B.3 above.

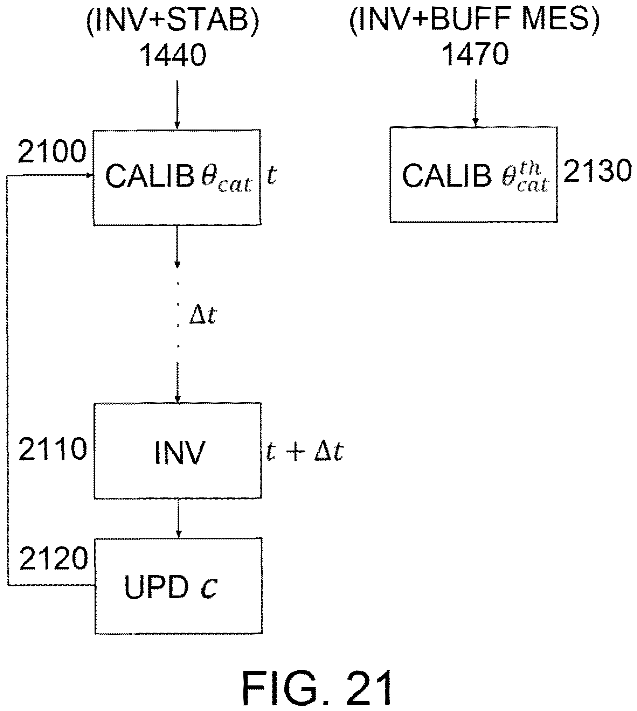

Such calibrations are described with reference to figure 21.

C.1 Calibration of the cat qubit phase over time

This subsection C.1 describes a calibration of the cat qubit phase $\theta_{cat}$ over time. Such a calibration is implemented in the context of the characterization corresponding to the combination of the "INV" and "STAB" parts of the characterization method of figure 14.

In an operation 2100, the phase cat qubit $\theta_{cat}$ is calibrated, i.e. set to a desired value.

To dos this, the intercept c is used. As a reminder, the cat qubit phase $\theta_{cat}$ and the intercept c are linked by the following relationship:

$$\theta_{cat} = \frac{1}{2}\theta_d^c + c$$

Equivalently:

$$\theta_d^c = 2(\theta_{cat} - c)$$

Therefore, for a desired value $\widetilde{\theta_{cat}}$ of the cat qubit phase $\theta_{cat}$, the buffer phase $\theta_d^c$ can be adjusted to be set to the following value $\widetilde{\theta_d^c}$ :

$$\widetilde{\theta_d^c} = 2(\widetilde{\theta_{cat}} - c)$$

It is generally preferable to have a horizontal cat, i.e. a cat qubit whose phase $\theta_{cat}$ is zero, i.e. $\widetilde{\theta_{cat}} = 0$. In such a case, the buffer phase $\theta_d^c$ should be set to the following value $\widetilde{\theta_d^c}$ :

$$\widetilde{\theta_d^c} = -2c$$

Without loss of generality, it is assumed in the remainder of the description that a horizontal cat is desired.

As explained in section B., the non-linear superconducting quantum circuit 3 is controlled by the command circuit 5, which is characterized by source control parameters that include the respective phases $\theta_m^c$ and $\theta_d^c$ of the memory drive 11 and the buffer drive 13, and, if applicable, the phase $\theta_p^c$ of the two-photon pump 17.

However, the disadvantage of control source parameters is that they fluctuate over time. In other words, the command circuit 5 is prone to failures. In the example of figure 15, such fluctuations affect the memory phase $\theta_m^c$, the buffer phase $\theta_d^c$ and the two-photon phase $\theta_p^c$. These phases are therefore time-dependent:

$$\theta_m^c = \theta_m^c(t)$$

$$\theta_d^c = \theta_d^c(t)$$

$$\theta_p^c = \theta_p^c(t)$$

At time $t$ when the operation 2100 is implemented, the cat qubit phase $\theta_{cat}$ is set, but the buffer phase $\theta_d^c$ will fluctuate over time and, as a result, the cat qubit will rotate.

This phenomenon of undesired cat qubit rotation is illustrated in figure 1, either in diagram (a) for a frequency synthesizer with an accuracy of 0.01 hertz (Hz) or in diagram (b) for a frequency synthesizer with an accuracy of 0.001 hertz (Hz).

To correct such a rotation, it is tempting to simply set the phase buffer $\theta_d^c$ back to the value determined at operation 2100; however, there is an obstacle: the intercept c has also changed over time.

As a reminder, the intercept c is expressed as follows:

$$c = \frac{\pi}{2} + \frac{1}{2}\left(\theta_p^c - 2\theta_m^c\right) + \frac{1}{2}(\Delta\theta_p^{in} + \Delta\theta_d^{in} - 2\Delta\theta_m^{in})$$

Just as the buffer phase $\theta_d^c$, the memory phase $\theta_m^c$ and the two-photon phase $\theta_p^c$ fluctuate over time, so the intercept $c$ is a function of time:

$$c = c(t)$$

At time $t + \Delta t$, the value $\bar{c}(t)$ of the intercept $c$ determined at time $t$ is no longer usable; the new value $\bar{c}(t + \Delta t)$ of the intercept $c$ must thus be determined.

To do this, the buffer phase $\theta_d^c$ can be reset and a new quantum state tomography performed, as in the operation 1430 of the "STAB" part of the characterization method of figure 14. The value $\bar{c}(t + \Delta t)$ of the intercept $c$ at time $t + \Delta t$ is then recovered.

However, a quantum state tomography, and in particular Wigner tomography, is a time-consuming and resource-intensive process. Therefore, it is preferable to rely on the operating constant $K$ of the quantum system 1 determined in the operation 1440. The operating constant $K$ does not fluctuate in time, or only very marginally:

$$K = \frac{\pi}{2} + \Delta\theta_d^{in} + \Delta\theta_b^{out}$$

In an operation 2110, an inverse measurement is performed instead of a quantum state tomography.

Such an inverse measurement is performed in the same way as in the "INV" part of the characterization method of figure 14; it is thus possible to refer to subsection B.1 and to figure 16.

The inverse measurement provides the value $\widetilde{\theta_{b,1}^{RDO}}(t + \Delta t)$ of the measured phase $\theta_{b,1}^{RDO}$ of the first buffer state at time $t + \Delta t$.

The phase $\theta_{b,1}^{RDO}$ of the first buffer state and the operating constant $K$ are linked by the following relationship:

$$K = \theta_{b,1}^{RDO} + 2c$$

In an operation 2120, it is then possible to find the value $\tilde{c}(t + \Delta t)$ of the intercept c at time $t + \Delta t$:

$$\tilde{c}(t + \Delta t) = \frac{1}{2}[K - \widetilde{\theta_{b,1}^{RDO}}(t + \Delta t)]$$

As shown in figure 21, the calibration over time forms a loop; the operation 2100 is performed again following operation 2120, and the buffer phase $\theta_d^c$ is adjusted as follows in order to calibrate the cat qubit phase $\theta_{cat}$ to have a horizontal cat again:

$$\widetilde{\theta_d^c}(t + \Delta t) = -2\tilde{c}(t + \Delta t)$$

Or, equivalently, and without the intercept c:

$$\widetilde{\theta_d^c}(t + \Delta t) = \widetilde{\theta_{b,1}^{RDO}}(t + \Delta t) - K$$

More generally, for a desired value $\widetilde{\theta_{cat}}$, the buffer phase $\theta_d^c$ is adjusted as follows in order to calibrate the cat qubit phase $\theta_{cat}$ to have the desired value $\widetilde{\theta_{cat}}$:

$$\widetilde{\theta_d^c}(t + \Delta t) = 2\widetilde{\theta_{cat}} + \widetilde{\theta_{b,1}^{RDO}}(t + \Delta t) - K$$

The cat qubit phase $\theta_{cat}$ can be corrected over time, typically to keep the cat horizontal, by performing an inverse measurement each time. On the whole, a single quantum state tomography is necessary and sufficient.

C.2 Calibration of the cat qubit phase

This subsection C.2 describes a somewhat special calibration, since it is more akin to a preparation of the quantum system 1 for subsequent stabilization of a cat qubit in the memory mode a. Such a calibration is implemented in the context of the characterization corresponding to the combination of the "INV" and "BUFF MES" parts of the characterization method of figure 14.

In particular, such a calibration makes it possible to have the desired value $\widetilde{\theta_{cat}}$ of the cat qubit phase $\theta_{cat}$ when the command circuit 5 stimulates the non-linear superconducting quantum circuit 3 to stabilize the cat qubit in the memory mode a with the same source control parameters as those used for the "INV" part, i.e. the two-photon phase $\theta_p^c$, and for the "BUFF MES" part, i.e. the buffer phase $\theta_d^c$.

In an operation 2130, the phase $\theta_{cat}^{th}$ of the theoretical cat qubit is calibrated.

As explained in subsection B.3, it is possible to implement the "INV" part of the characterization method of figure 14 and then the "BUFF MES" part, or vice versa. In either case, the following formula, which links the phase $\theta_{cat}^{th}$ of the theoretical cat qubit, the measured phase $\theta_{b,1}^{RDO}$ of the first buffer state and the measured phase $\theta_{b,2}^{RDO}$ of the second buffer state, is used:

$$\theta_{b,2}^{RDO} - \theta_{b,1}^{RDO} = 2\theta_{cat}^{th} - \pi$$

If the "INV" part is implemented first, the configuration at the end of the operation 1470 is that of figure 20 corresponding to the "BUFF MES" part. In such a case, the buffer phase $\theta_d^c$ is adjusted so that the measured phase $\theta_{b,2}^{RDO}$ of the second buffer state buffer is as follows:

$$\theta_{b,2}^{RDO} = \theta_{b,1}^{RDO} + 2\widetilde{\theta_{cat}} - \pi$$

Conversely, if the "BUFF MES" part is implemented first, the configuration at the end of the operation 1470 is that of figure 16 corresponding to the "INV" part. In such a case, the buffer phase $\theta_d^c$ and/or the two-photon phase $\theta_p^c$ is adjusted so that the measured phase $\theta_{b,1}^{RDO}$ of the first buffer state is as follows:

$$\theta_{b,1}^{RDO} = \theta_{b,2}^{RDO} - 2\widetilde{\theta_{cat}} + \pi$$

It is then possible to stabilize a cat qubit in the memory mode a while preserving the source control parameters of the calibration. In the example developed here, such a stabilization is performed with the configuration of figure 17. This stabilization, which corresponds to the parametric dissipative stabilization presented in subsection A.3, is performed by driving the buffer mode b with the buffer drive 13 at frequency $f_b$ while parametrically pumping the ATS 7 with the two-photon pump 17 at frequency $f_p = |2f_a - f_b|$.

The phase $\theta_{cat}$ of the cat qubit stabilized in the memory mode a is known without even performing a quantum state tomography. More particularly, the value of the phase $\theta_{cat}$ of the cat qubit stabilized in the memory mode a is $\widetilde{\theta_{cat}}$.

## Claims

**1.** A method of characterizing a quantum system (1), said quantum system (1) comprising:

- a non-linear superconducting quantum circuit (3) including :

  • at least one resonant portion (9) having a memory mode (a) with a memory resonant frequency and a buffer mode (b) with a buffer resonant frequency, and
  • a non-linear element (7) coupled to said at least one resonant portion (9),

- a command circuit (5) including at least :

  • a memory drive (11) arranged to deliver electromagnetic radiation at a frequency substantially equal to the memory resonant frequency to the at least one resonant portion (9) to drive the memory mode (a), said memory drive (11) having a controllable memory phase, and
  • a buffer drive (13) arranged to deliver electromagnetic radiation at a frequency substantially equal to the buffer resonant frequency to the at least one resonant portion (9) to drive the buffer mode (b), said buffer drive (13) having a controllable buffer phase,

said quantum system (1) being arranged to engineer a two-to-one boson exchange between the memory mode (a) and the buffer mode (b),
said method comprising the following operations:

  a) engineering (1401) the two-to-one boson exchange between the memory mode (a) and the buffer mode (b) and turning on (1402) the memory drive (11) with the memory phase being set, the buffer drive (13) being turned off, causing the non-linear superconducting quantum circuit (3) to generate a first buffer state in the buffer mode (b);
  b) measuring (1410) a phase of said first buffer state;

the method further comprising the following operations:

> c1) engineering (1421) the two-to-one boson exchange between the memory mode (a) and the buffer mode (b) and turning on (1422) the buffer drive (13) with the buffer phase being set, causing the non-linear superconducting quantum circuit (3) to stabilize a cat qubit in the memory mode (a),
> c2) performing (1430) a quantum state tomography by turning on the memory drive (11) with the memory phase being substantially the same as that of operation a), and measuring a phase of said cat qubit, and
> c3) determining (1440) an operating constant of the quantum system (1) based on the set buffer phase and the respective phases of the first buffer state and the cat qubit;
> or,
> d1) turning on (1450) the buffer drive (13) with the buffer phase being set, the two-to-one boson exchange between the memory mode (a) and the buffer mode (b) and the memory drive (11) being both turned off, causing the non-linear superconducting quantum circuit (3) to generate a second buffer state in the buffer mode (b), d2) measuring (1460) a phase of said second buffer state, and
> d3) determining (1470) a phase of a cat qubit to be subsequently stabilized in the memory mode (a) by the non-linear superconducting quantum circuit (3) by engineering the two-to-one boson exchange between the memory mode (a) and the buffer mode (b) and turning on the buffer drive (13) with the buffer phase being substantially the same as that of operation d1), said phase of the cat qubit to be subsequently stabilized being determined based on a difference of the respective phases of the first buffer state and the second buffer state.

2. The method of claim 1, the non-linear element (7) being an asymmetrically threaded superconducting quantum interference device, and the command circuit (5) further including a two-photon pump (17) arranged to deliver electromagnetic radiation at a frequency substantially equal to the absolute value of the difference between twice the memory resonant frequency and the buffer resonant frequency to the asymmetrically threaded superconducting quantum interference device (7), wherein engineering (1401, 1421) the two-to-one boson exchange between the memory mode (a) and the buffer mode (b) in operation(s) a) and/or c1) includes turning on the two-photon pump (17).

3. The method of claim 1, the command circuit (5) further including a DC voltage source (51) arranged to deliver DC voltage to bias the non-linear element (7), with the delivered DC voltage having a value inducing an electromagnetic oscillation having a frequency substantially equal to the absolute value of the difference between twice the memory resonant frequency and the buffer resonant frequency in the non-linear superconducting quantum circuit (3), wherein engineering (1401, 1421) the two-to-one boson exchange between the memory mode (a) and the buffer mode (b) in operation(s) a) and/or c1) includes turning on the DC voltage source (51).

4. The method of claim 1, the non-linear element (7) being a three-wave mixing non-linear element, and the buffer resonant frequency being substantially equal to twice the memory resonant frequency, wherein the method comprises operations c1), c2), and c3), and the two-to-one boson exchange between the memory mode (a) and the buffer mode (b) is intrinsically engineered (1401, 1421) in operation(s) a) and/or c1) by the non-linear superconducting quantum circuit (3).

5. The method of one of the preceding claims, wherein the operating constant of the quantum system (1) is determined (1440) in operation c3) as follows:

$$K = 2\theta_{cat} + \theta_{b,1}^{RDO} - \theta_d^c$$

where: - K is the operating constant;

> - $\theta_{cat}$ is the phase of the cat qubit measured in operation c2);
> - $\theta_{b,1}^{RDO}$ is the phase of the first buffer state measured (1410) in operation b); and
> - $\theta_d^c$ is the buffer phase of the buffer drive (13) turned on (1422) in operation c1).

6. The method of one of the preceding claims, wherein operations a) and b) are performed prior to operations c1), c2) and c3), operation c1) includes only turning on (1422) the buffer drive (13) with the buffer phase being set, and operation c2) includes only performing (1430) the quantum state tomography, and measuring the phase of the cat qubit.

7. The method of one of claims 1 to 5, wherein operations c1), c2) and c3) are performed prior to operations a) and b), and operation a) includes only turning off the buffer drive (13).

8. The method of one of the preceding claims, wherein said method comprises operations c1), c2), and c3), and said method further comprises calibrating the quantum system (1) to achieve a desired value for the phase of the cat qubit, said calibrating of the quantum system (1) including:
c4) setting (2100) the buffer phase of the buffer drive (13) to the following value:

$$\widetilde{\theta_d^c} = 2\widetilde{\theta_{cat}} + \theta_{b,1}^{RDO} - K$$

where: - $\widetilde{\theta_d^c}$ is the value to which the buffer phase of the buffer drive (13) is set;

- $\widetilde{\theta_{cat}}$ is the desired value to be achieved for the phase of the cat qubit;

- $\theta_{b,1}^{RDO}$ is the phase of the first buffer state measured (1410) in operation b); and

- K is the operating constant.

9. The method of claim 8, wherein the calibrating of the quantum system (1) further includes, subsequent to operation c4):

c5) performing (2110) operations a) and b) again to measure a new phase of the first buffer state; and
c6) adjusting (2100, 2120) the buffer phase of the buffer drive (13) based on said new phase of the first buffer state.

10. The method of claim 8 or 9, wherein the desired value to be achieved for the phase of the cat qubit is substantially equal to zero.

11. The method of one of claims 1 to 3, wherein the phase of the cat qubit to be subsequently stabilized in the memory mode (a) by the non-linear superconducting quantum circuit (3) is determined (1470) in operation d3) as follows:

$$\theta_{cat}^{th} = \frac{1}{2}(\pi + \theta_{b,2}^{RDO} - \theta_{b,1}^{RDO})$$

where: - $\theta_{cat}^{th}$ is the phase of the cat qubit to be subsequently stabilized in the memory mode (a) by the non-linear superconducting quantum circuit (3);

- $\theta_{b,1}^{RDO}$ is the phase of the first buffer state measured (1410) in operation b); and

- $\theta_{b,2}^{RDO}$ is the phase of the second buffer state measured (1460) in operation d2).

12. The method of one of claims 1 to 3 or 11, wherein operations a) and b) are performed prior to operations d1), d2) and d3), and d1) includes turning off both the two-to-one boson exchange between the memory mode (a) and the buffer mode (b) and the memory drive (11), and turning on (1450) the buffer drive (13) with the buffer phase being set.

13. The method of claim 12, wherein said method further comprises calibrating the quantum system (1) to achieve a desired value for the phase of the cat qubit to be subsequently stabilized in the memory mode (a) by the non-linear superconducting quantum circuit (3), said calibrating of the quantum system (1) including:
d4) adjusting (2130) the buffer phase of the buffer drive (13) to cause the phase of the second buffer state to reach the following value:

$$\widetilde{\theta_{b,2}^{RDO}} = \theta_{b,1}^{RDO} + 2\widetilde{\theta_{cat}} - \pi$$

where: - $\widetilde{\theta_{b,2}^{RDO}}$ is the value to be reached for the phase of the second buffer state;

- $\theta_{b,1}^{RDO}$ is the phase of the first buffer state measured (1410) in operation b); and

- $\widetilde{\theta_{cat}}$ is the desired value to be achieved for the phase of the cat qubit.

14. The method of one of claims 1 to 3 or 11, wherein operations d1), d2) and d3) are performed prior to operations a) and b), and operation a) includes turning off the buffer drive (13), engineering (1401) the two-to-one boson exchange between the memory mode (a) and the buffer mode (b), and turning on (1402) the memory drive (11) with the memory phase being set.

15. The method of claim 14, wherein said method further comprises calibrating the quantum system (1) to achieve a desired value for the phase of the cat qubit to be subsequently stabilized in the memory mode (a) by the non-linear superconducting quantum circuit (3), said calibrating of the quantum system (1) including:
d4) adjusting (2130) the buffer phase of the buffer drive (13) and/or the two-to-one boson exchange between the memory mode (a) and the buffer mode (b) to cause the phase of the first buffer state to reach the following value:

$$\widetilde{\theta_{b,1}^{RDO}} = \theta_{b,2}^{RDO} - 2\widetilde{\theta_{cat}} + \pi$$

where: - $\widetilde{\theta_{b,1}^{RDO}}$ is the value to be reached for the phase of the first buffer state;

- $\theta_{b,2}^{RDO}$ is the phase of the second buffer state measured (1460) in operation d2); and
- $0_{cat}$ is the desired value to be achieved for the phase of the cat qubit.

(a)                    (b)

FIG. 1

FIG. 2

FIG. 3

FIG. 4

FIG. 5

FIG. 6

FIG. 7

FIG. 8

49

$\varphi_J$

$V_{DC}$

51

(V)

# FIG. 9

31

7

29

45

49

41

43

39

51

(V)

# FIG. 10

FIG. 11

FIG. 12

FIG. 13

FIG. 14

FIG. 15

FIG. 16

FIG. 17

FIG. 18

FIG. 19

FIG. 20

(INV+STAB)
1440

(INV+BUFF MES)
1470

2100 | CALIB $\theta_{cat}$ | $t$

CALIB $\theta_{cat}^{th}$ | 2130

$\Delta t$

2110 | INV | $t + \Delta t$

2120 | UPD $c$

# FIG. 21

## EUROPEAN SEARCH REPORT

**Application Number**

EP 24 30 7031

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BERDOU C ET AL: "One hundred second bit-flip time in a two-photon dissipative oscillator", ARXIV.ORG, CORNELL UNIVERSITY LIBRARY, 201 OLIN LIBRARY CORNELL UNIVERSITY ITHACA, NY 14853, 19 April 2022 (2022-04-19), XP091206189, * abstract * * chapters I-VI; page 1 - page 6; figures 1-4 * * chapters S1-S5; page 9 - page 20; figures S1-S12 * | 1-15 | INV. G06N10/40 G06N10/70 |
| A | CHRISTOPHER CHAMBERLAND ET AL: "Building a fault-tolerant quantum computer using concatenated cat codes", ARXIV.ORG, CORNELL UNIVERSITY LIBRARY, 201 OLIN LIBRARY CORNELL UNIVERSITY ITHACA, NY 14853, 27 January 2022 (2022-01-27), XP091125260, * abstract * * chapters I-III; page 1 - page 18; figures 1-4 * * section "Z-basis measurement"; page 73 - page 76; figure 41 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 10 April 2025 | Hasnas, Sergiu |

EPO FORM 1503 03.82 (P4C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

Patent documents cited in the description

- EP 23175147
- EP 23306839
- EP 21306965

Non-patent literature cited in the description

- **R. LESCANNE et al.** Exponential suppression of bit-flips in a qubit encoded in an oscillator. *Nature Physics*, 2020
- **Z. LEGHTAS et al.** Confining the state of light to a quantum manifold by engineered two-photon loss. *Science*, 2015, vol. 347 (6224)
- **S. TOUZARD et al.** Coherent Oscillations inside a Quantum Manifold Stabilized by Dissipation. *Physical Review X 8, 023005*, 2018
- **P. ARRANGOIZ-ARRIOLA et al.** Resolving the energy levels of a nanomechanical oscillator. *Nature*, 2019, vol. 571, 537